(19) Europäisches Patentamt / European Patent Office / Office européen des brevets

(11) **EP 4 540 915 B1**

(12) **EUROPEAN PATENT SPECIFICATION**

(45) Date of publication and mention
of the grant of the patent:
**01.04.2026 Bulletin 2026/14**

(21) Application number: **23757995.8**

(22) Date of filing: **29.05.2023**

(51) International Patent Classification (IPC):
***H02K 15/0421*** (2025.01)

(52) Cooperative Patent Classification (CPC):
**H02K 15/0421**

(86) International application number:
**PCT/IB2023/055472**

(87) International publication number:
**WO 2023/242657 (21.12.2023 Gazette 2023/51)**

(54) **DEVICE FOR LOADING, INSERTING AND HANDLING SEGMENTED CONDUCTORS INTO A MOULD TO FORM A WINDING**

VORRICHTUNG ZUM LADEN, STECKEN UND HANDHABEN VON LEITERSEGMENTEN IN EINE FORM ZUR HERSTELLUNG EINER WICKLUNG

DISPOSITIF POUR CHARGER, INSÉRER ET MANIPULER DES SEGMENTS DE CONDUCTEURS DANS UN MOULE POUR LA FABRICATION D'UN ENROULEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.06.2022 IT 202200012530**

(43) Date of publication of application:
**23.04.2025 Bulletin 2025/17**

(73) Proprietor: **Tecnomatic SpA**
**64013 Corropoli (Teramo) (IT)**

(72) Inventors:
• **RUGGIERI, Giovanni**
**64013 Corropoli (Teramo) (IT)**
• **MICUCCI, Maurilio**
**64013 Corropoli (Teramo) (IT)**
• **RANALLI, Giuseppe**
**64013 Corropoli (Teramo) (IT)**

(74) Representative: **Perronace, Andrea et al**
**Jacobacci & Partners S.p.A.**
**Via Tomacelli, 146**
**00186 Roma (IT)**

(56) References cited:
EP-A1- 3 700 071          WO-A1-2019/207448
WO-A2-2018/039806     JP-A- 2004 072 839
JP-A- 2012 151 996        US-A1- 2020 336 054
US-A1- 2020 343 797

**Description**

The present invention relates to a removable device for loading and handling basic conductors for the assembly of a stator or rotor winding.

**Background art**

It is generally known to provide stators or rotors of electric machines, such as generators or electric motors, e.g., for applications on hybrid electric vehicles (HEVs), in which the stator or rotor winding consists of a plurality of bar conductors bent and variously interconnected to one another so as to obtain electric windings also known as "bar windings". Said bent bar conductors are also referred to as "hairpin conductors" or simply "hairpins". Bar windings can consist of one or more groups of concentric windings, sometimes known as "crowns", each group of windings being already a winding per se ("winding sets").

In particular, windings with hairpins having a circular cross-section (also known as "round-wire conductors") or a rectangular cross-section, or even conductors with a variable cross-section geometry along the length (e.g., round conductors made rectangular in the part housed in the stator or rotor slot) are known in the prior art. In this regard, "rectangular" or "square" conductor wire means in the present description a wire having four substantially flat sides, each joined to the adjacent sides, typically by a rounded edge. Bar conductors having a trapezoidal-shaped cross-section are known.

The aforesaid bar conductors are usually preformed by bending in a "U" or a "P" shape starting from straight bar conductors. Patent US 7,480,987 describes an example of a method for preforming straight bar conductors to form hairpins. "U" or "P"-shaped preformed conductors, often also referred to as "preformed basic conductors" in the technical field, typically have two adjacent legs of equal or different length, each having a free end portion and an opposite end portion connected to the other of the two leg by means of a bridge-like connecting portion. Since the end portions protrude when they are inserted into the rotor or stator, they will henceforth be referred to as the "free protruding portion" and "opposite connected protruding portion". The protruding portion(s) can also be referred to as "head portion(s)" or "bridge-like connected portion". The assembly of the "head portions" of the legs of the same hairpin forms the so-called "bridge-like connection".

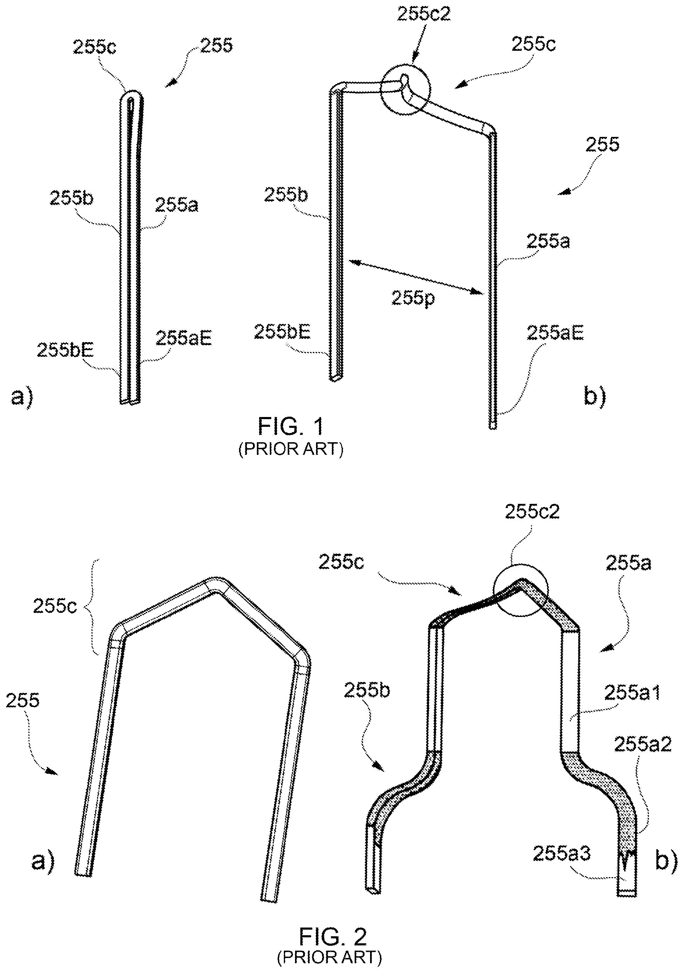

With reference to Fig. 1(a), a hairpin 255 is preformed from a linear hairpin (not shown) by bending it to form a first leg 255a with a respective free protruding end portion 255aE and a second leg 255b with a respective free protruding end portion 255bE. The bending simultaneously forms a bridge-like connection 255c between the two legs 255a, 255b. The preformed hairpin, in this example, is in the shape of a flattened "U". To form a stator of an electric machine, for example, it is known to subject the "U" or "P"-shaped preformed hairpins to two different types of twisting.

A stator or rotor core of a radial magnetic flux electric machine is substantially a ring having two flat faces and two cylindrical surfaces, having generatrices perpendicular to the two flat faces parallel to the rotation axis of the rotor of the electric machine. The radial, circumferential, and axial directions hereinafter refer to the latter axis, unless specified otherwise. One of the two cylindrical surfaces is adjacent, at least in part, to the air gap of the electric machine, to which said stator or rotor belongs and defines a set of slots in which the straight parts of the winding are housed. The two flat surfaces are divided into the insertion surface or side and the surface or side opposite to the insertion side. The parts of the winding which protrude from said core are referred to as headers. The ends of the free portions of the conductors belong to the header protruding from the side opposite to the insertion side, most of which are subject to welding. If protruding portions connected in a bridge-like manner to the legs inserted into the stator slots are present in the winding, they belong to the header protruding from the insertion side. The portions protruding from the insertion side, either free or connected in a bridge-like manner, are indicated hereafter as portions protruding from the insertion side.

The stator or rotor core region between one slot and an adjacent one is referred to as a tooth. The number of teeth is equal to the number of slots. The connecting part of the teeth of the core, which also defines a portion of each slot and is located with respect thereto on the side opposite to the slot opening (if present) on the air gap of the machine, is referred to as a yoke.

The slot can be divided into an array of positions in each of which a leg of a basic conductor can be placed. The conductors housed in the same radial position as the slots define a so-called winding layer.

In a first type of twisting, also referred to as "twisting on the insertion side", the preformed basic conductors are appropriately inserted into corresponding radially aligned pockets or "slots", which are radially aligned provided in a twisting device, adapted to deform such conductors after insertion. The twisting device is substantially used to spread the legs of the "U" or "P" shape so that, after extracting the conductor from the device, the two legs of each conductor can then be inserted into a corresponding pair of slots of a stator core, which are mutually angularly offset by a predetermined distance, substantially equal to the angular distance between the slots in which the legs are then inserted, and radially spaced apart by the radial distance between the slot positions occupied by the legs, respectively.

Starting from a preformed hairpin, for example, but not exclusively, as shown in Fig. 1(a), a hairpin of a suitable shape for the insertion thereof into the stator (or rotor) is formed by widening the legs 255a, 255b and shaping the bridge-like connection 255c, e.g., to obtain the shape in Fig. 1(b). Reference numeral 255p indicates the pitch of the hairpin, i.e., the linear distance or the angular distance, or the distance in terms of slot pitches, between the legs. It is worth noting that, again, in this case, the central top 255c2 of the formed hairpin is the zone in which the cross-section of the conductor is subjected to a 180° rotation with respect to the median surface of the hairpin (the surface which passes inside the hairpin and includes the two legs). Said rotation is useful in some layered hairpins, which will be defined hereafter, to transpose the layers (exchange of slot positions) thus reducing eddy currents circulating through the ends of the layers when they are welded together, compared with the case in which the same layers run parallel without exchanging slot position in the transition from one leg to the other.

The patent application published under US 2009/0178270 describes an example of a twisting method on the insertion side for twisting, at a uniform pitch, the preformed bar pins after inserting them into the pockets of a twisting device, in which the hairpins have a rectangular section.

According to the prior art and with reference to Fig. 2, the hairpins can also be obtained by molding, in which process a straight conductor is pressed against a contrast with a punch and die type system. Fig. 2(a) shows such a molded conductor; it does not have a cross-section which rotates with respect to the median surface of the hairpin.

This molded hairpin or also a preformed and spread hairpin, obtained as described above, can be subjected to the so-called "welding side twisting", in which case it is possible to introduce a "step-like" shape of the protruding portions of the legs 255a and 255b, in which, for example, the leg 255a has a first straight portion 255a1, a step-like portion 255a2 and a second straight portion 255a3 (substantially corresponding to portion 255aE in Fig. 1) as in Fig. 2(b).

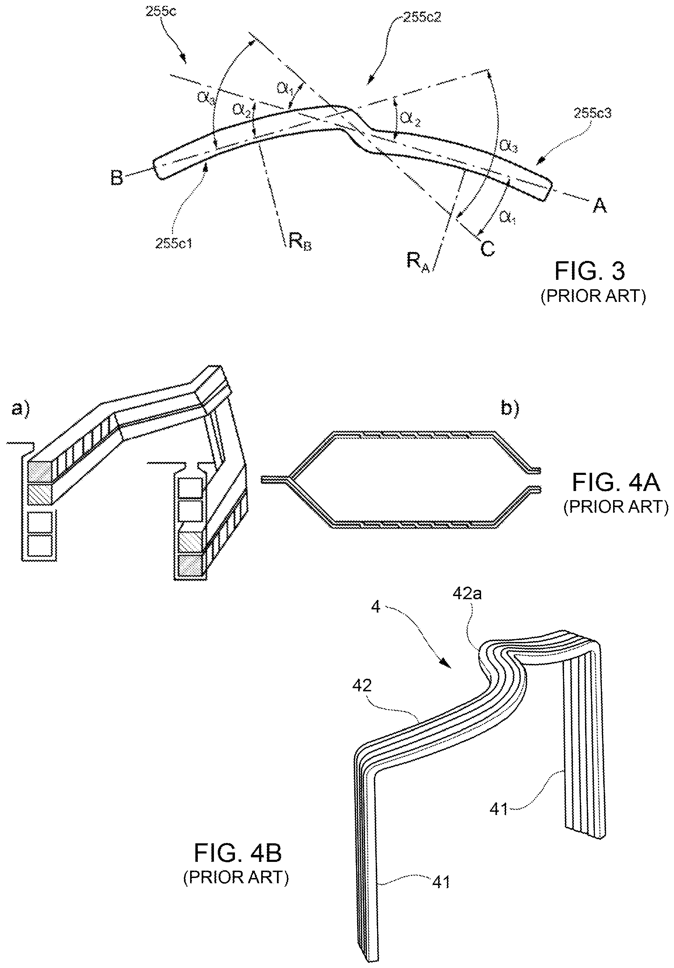

With reference to Fig. 3, the shape of the protruding portion on the insertion side, i.e., of the bridge-like connection 255c, for a molded hairpin, can comprise three portions 255c1, 255c3, and 255c2 starting from the connection to the second leg 255b and finishing at the connection to the first leg 255a (hidden from view in Fig. 3. The portion 255c1 has a main extension direction B and a radius of curvature RB, the portion 255c3 has a main extension direction A and a radius of curvature RA, the portion 255c2 has a main extension direction C (and possibly a curvature, not indicated). Hereafter, the portion 255c2 is referred to as the "layer change bend"; indeed, by virtue of it, the head and leg portions of the hairpins are on different layers when they are inserted into the respective slots of the stator pack. Reference $\alpha 1$ indicates the angle between the directions A and C, reference $\alpha 2$ indicates the angle between directions A and B and reference $\alpha 3$ indicates the angle between directions B and C, equal to the sum of the angles $\alpha 1$ and $\alpha 2$. This is only one of the final possible shapes of a hairpin, all other shapes with different portions and shapes of both the bridge-like portion and the legs are usable with the apparatus and a method according to the present description.

There are also conductors defined as "reverse" conductors (not shown), and they are hairpins with a bending direction in the bridge-like connection opposite to that of most hairpins that form the same winding. These are used to go from the last layer of one crown to the first layer of the next crown.

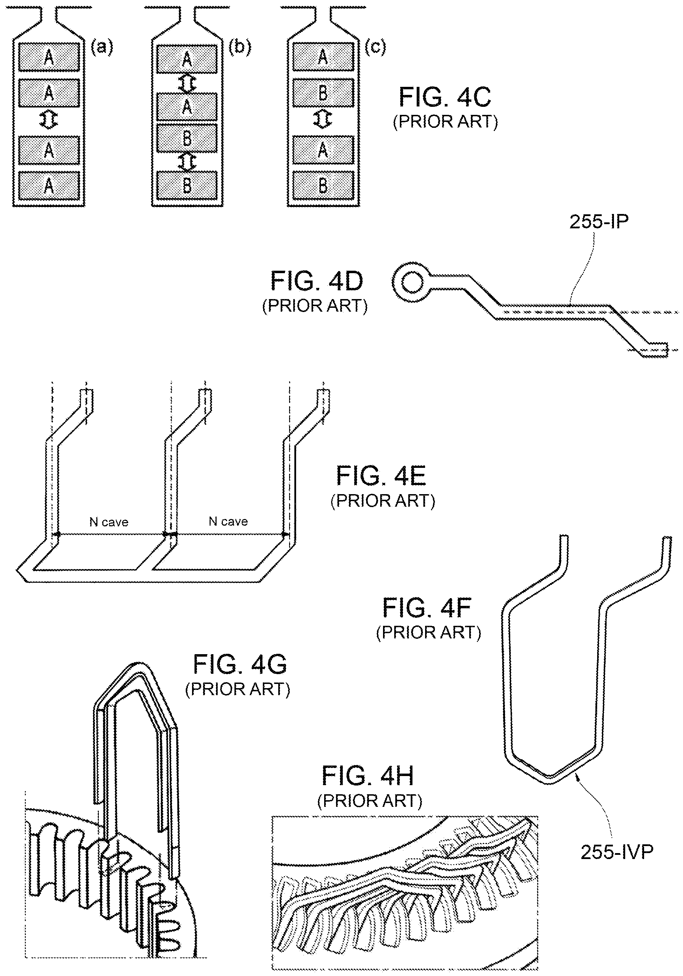

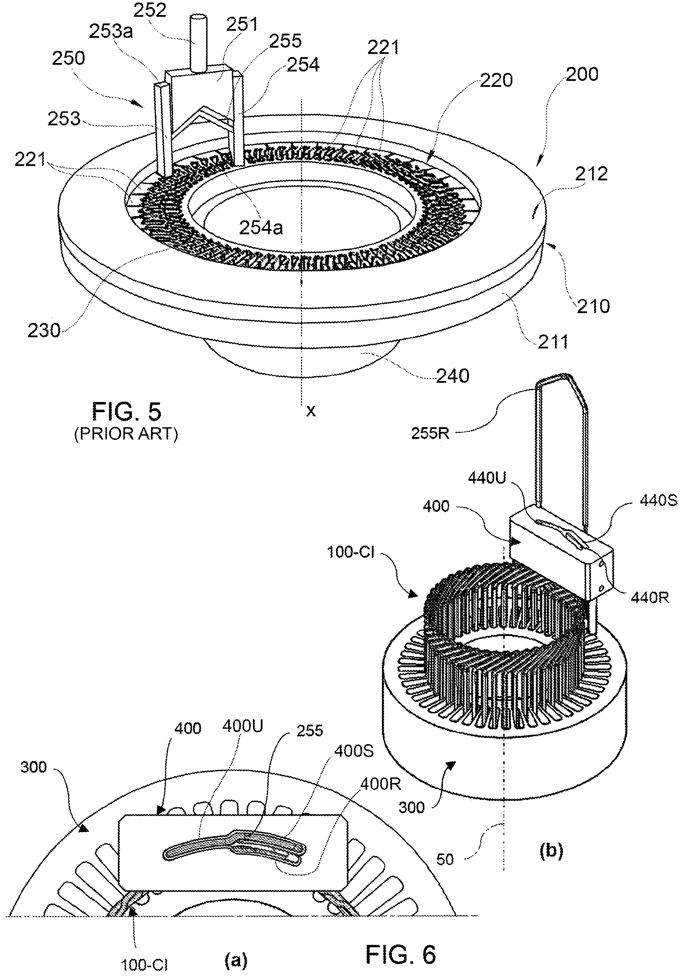

Furthermore, and with reference to Fig. 4A, there is a layered ("stranded") hairpin with a reversal of the cross-section at the bending point (Fig. 4A(a)), which causes the exchange of the position occupied by the layers. As noted from the type of hatching of the cross-sections in Fig. 4A(a), by virtue of said reversal, or exchange of position, the upper layer in the pair of layers in the left slot is below the other one in the right slot. In another hairpin form, the transposition can be continuous along the portions of the hairpin housed in the slot (Fig. 4A(b); US 3837072). The variant shown in Fig. 4B is a layered hairpin without reversal, shown in US8552611 B2 (layered hairpin 4 with a plurality of hairpins 42 each with legs 41 and head ends 42a with bending). Fig. 4C (obtained from Fig. 6 of Patent US 6,894,417 B2) shows the variants of the arrangement of the legs of the layered hairpins in a double-crown winding in different positions in the slot. Reference letters A and B indicate the crown to which the legs shown in the slot belong (belonging to different hairpins).

Again, there are pins referred to as "I-pins", i.e., a pin to be housed in a single slot and, when in the slot, having the portions with free ends protruding from both flat faces of the stator core. Fig. 4D shows an example of an I-pin, which does not necessarily have to have all the direction changes shown; it can also have none, and be bent on the output side of a hairpin winding assembly drum. The ends of the I-pin can be welded to ends of other conductors protruding from the slots or to third elements (e.g., bus bars, eyelets) or they can serve as phase terminals. The portions can be subject to bending of the "welding side" type. An example of an I-pin can be found in the hairpins indicated with references 81-83 in document US7622843B2. "W-shaped conductors" are also known, see patent US 7,622,843 B2 again, for example, and Fig. 4E where the distance between the legs is N slots. A W-shaped conductor can be formed by welding a molded hairpin with one I-pin or by welding a fourth conductor to three I-pins. Once again, the W-pin does not necessarily have to have all the direction changes shown, it can also have none, and be bent on the output side of the hairpin winding assembly drum.

With illustrative reference to Fig. 4F (obtained from US10749399B2), there is also the so-called "inversion hairpin" 255-IVP, i.e., a hairpin, which can be formed by spreading the legs (not with the insertion-side twisting method described above) or molded with "press and die" systems, characterized in that the legs in the respective slots occupy the same radial position, i.e., they belong to the same layer. Therefore, the ends thereof on the twisting side will be bent in the same direction. In actual fact, the protruding portions on the side of the bridge-like connection can be bent in the same tangential direction or they can take a V shape. At least two-layer change bends can be required on the connection portion.

Finally, there are pairs of hairpins the homologous legs of which belong to different layers (Fig. 4G) or to the same layer (Fig. 4H) and they are configured and dimensioned to be nested.

Hereafter, all the "hairpin" types, as well as the I-pins and the W-pins will be included in the definition of "basic conductors".

After being subjected to the first type of twisting or after they have been molded, the basic conductors are typically pre-assembled in a winding set as mentioned above. The pre-assembly apparatus will have a set of slots, generally in an equal number to the slots of the stator associated with the winding, into which to insert the legs of each hairpin, and will generally be different from the twisting device.

The winding set is then inserted en bloc into the slots of the stator core through a first side thereof (so-called "insertion side" or "insertion face") with the respective free portions protruding from a second side of the core (so-called "welding side" or "connection side" or "welding face" or "escaping face") opposite to the first side.

Based on the specific winding pattern to be obtained, the free portions of the basic conductors protruding from the side opposite to the insertion side can then be subjected to a second type of twisting, also referred to as "twisting on the welding side", e.g., after having been inserted into pockets made in an appropriate twisting equipment. Here, the twisting equipment has the purpose of bending or twisting the free portions of the conductors to appropriately shape said free portions and thus allow the appropriate electric connections to be obtained between the conductors to complete the winding. A patent application published under number US 2009/0302705 describes an example of a twisting method on the welding side of the type discussed above.

Electric winding assembly systems for stators and/or rotors are known. Systems for transferring the winding and inserting it into a stator pack are also known.

For example, international patent application WO2019207448A1 describes an apparatus for pre-assembling a stator winding of an electric machine which includes a plurality of basic conductors (see Fig. 5 of the present description). However, such an apparatus is configured to process and insert only one type of hairpin at a time into a stator pack. Hence, the problem of having to manually modify the insertion system according to the type of hairpin to be inserted, greatly increasing the cycle time of the apparatus and thus reducing the efficiency of the system as a whole.

Patent document US2020336054 describes an alignment apparatus, which is provided to align winding segments to form an aligned winding, includes a cylindrical containment for hairpins provided with slots. The containment has radial teeth which are rotatable with respect to the cylindrical body. The cylindrical containment further has an internal inlet provided in the internal cylinder, an external inlet provided in the external cylinder, and some guide walls between such openings. Such guide walls are below the plane of the rotatable radial teeth. A device for inserting hairpins into slots above the plane of the rotatable teeth is described, which is configured to insert hairpins one by one at predetermined times into predetermined slots, to allow the rotation of the teeth between one insertion and the other. The morphological configuration of such an insertion device is not described. This apparatus suffers from the same problem mentioned above, i.e., it is configured to process and insert only one type of hairpin at a time inside a stator pack. Hence, the problem of having to manually modify the insertion system according to the type of hairpin to be inserted, greatly increasing the cycle time of the apparatus and thus reducing the efficiency of the system as a whole.

Patent document EP3700071A1 describes a system for the simultaneous pre-assembly of hairpins in a stator winding. The system includes a containment with hairpin slots formed by radially retractable teeth. The hairpins are first all inserted in a corresponding position into all the necessary slots, and then the radial teeth are rotated about the containment axis so that the same hairpins rotate and position themselves simultaneously in an assembled crown. Here too the insertion means are not described in detail, and the simultaneous assembly of the hairpins does not allow for the insertion and inclusion of hairpins of different types in the same pre-assembly process.

Patent document JP2004072839 describes a system with a slot containment in which the hairpins of a crown are all inserted before making a rotation that brings them to the crown position. However, in this case no radial teeth are provided, and the system suffers from the same limitations as those of the other documents described above.

Patent document WO2018039806A2 describes a method and system for assembling hairpins in a stator core. The slot containment is divided into three, with hinges that allow the relative rotation of the three parts. The hairpins are independently inserted into the three containment parts, and then the containment is closed to form the complete winding. It is apparent that this arrangement is very complicated and has a high cycle time, due to the insertion into three distant container parts and due to the rotation of such parts. Although it is theoretically possible to use different types of hairpins, the efficiency of the system is low and its costs are high. Furthermore, due to the complexity of the system, it undergoes significant wear.

US 2020/343797 discloses an aligning apparatus is provided for aligning coil segments in an annular shape to form an aligned coil. Each of the coil segments has a pair of first and second leg portions. The aligning apparatus includes an outer jig and an inner jig. The outer jig has partitioning members arranged in a radial fashion. The partitioning members are spaced at such intervals as to allow each of the first leg portions of the coil segments to be inserted between one circumferentially-adjacent pair of the partitioning members. The inner jig has hole-forming members arranged radially inside the partitioning members of the outer jig. Each of the hole-forming members has formed therein a hole in which one of the second leg portions of the coil segments is to be inserted. Moreover, the hole-forming members are configured to be rotatable relative to the outer jig in a circumferential direction and radially movable.

JP 2012 151996 discloses to provide a method for annularly arranging coil segments includes a process of sequentially guiding the plurality of coil segments each formed to have an approximately U-shape and having a pair of legs and a connection part interconnecting the legs and annularly arranging the coil segments while superposing them. In the annularly arranging process (annular arrangement tool), insulating paper is inserted to a portion corresponding to the connection part between the pair of legs of the coil segment.

The need is felt to assemble the winding all in one system, so as to insert it more easily into the stator pack, pursuing the time-cycle and accuracy specifications, as well as the specifications on costs and ease of maintenance, which are increasingly stringent today.

## Purpose and object of the invention

It is the object of the present invention to provide a device for loading and handling basic conductors which solves all or part of the problems and overcomes the drawbacks of the prior art.

The present invention relates to a device for loading and handling basic conductors for the assembly of a stator or rotor winding according to the appended claims.

## Detailed description of embodiments of the invention

### List of figures

The invention will now be described by way of non-limiting illustration, with particular reference to the figures in the accompanying drawings, in which:

- Fig. 1 shows in (a) a preformed flattened U-shaped hairpin and, in (b), a formed hairpin, according to the prior art;
- Fig. 2 shows in (a) a molded hairpin, and in (b) a hairpin after being subjected to a welding-side twisting;
- Fig. 3 shows the hairpin in 2(a) from above, according to the prior art;
- Fig. 4A shows in (a) a layered ("stranded") hairpin with reversal of the cross-section at the bending point and, in (b), with continuous transposition along the portions of the hairpins housed in a slot, according to the prior art;
- Fig. 4B shows a layered type of hairpin;
- Fig. 4C shows the variants of the arrangement of the legs of the layered hairpins in a double-crown winding in different positions in the slot, according to the prior art;
- Fig. 4D shows an example of an I-pin, according to the prior art;
- Fig. 4E shows an example of a "W-pin", according to the prior art;
- Fig. 4F shows an example of an "inversion hairpin", according to the prior art;
- Fig. 4G shows an example of nested hairpins on different layers, according to the prior art;
- Fig. 4H shows an example of nested hairpins on the same layer, according to the prior art;
- Fig. 5 shows an apparatus for pre-assembling a winding, according to international application WO2019207448A1;
- Fig. 6 shows the means for inserting the reverse hairpin;
- Fig. 7 shows a device for inserting the first basic reverse conductor into the winding,
- Fig. 8 shows a forming solution with multiple circular containments;
- Fig. 9 shows the situation in the step of forming the helical widening profile,
- Fig. 10 shows possible movements of a circular containment ;
- Fig. 10a shows a variant of figure 10, where the containment system comprises retractable radial elements;
- Fig. 10b illustrates an embodiment similar to that of the previous figures but with the insertion and handling device 400 reversed, i.e., with the tip (wedge-shaped guide and containment end) 410 pointing clockwise instead of counterclockwise;
- Fig. 11 shows an embodiment of the removable insertion and handling device, specific for inserting the first of two nested basic conductors;
- Fig. 12 shows in (a) the standard basic conductor positioned, in (b) the insertion of the nested basic conductor and in (c) a top view of the insertion in (b),
- Fig. 13 shows two views of the inserted nested basic conductor, still inside the inserter;
- Fig. 14 shows a front view of the inserter,
- Fig. 15 shows the system for loading and handling the basic conductors with the containment volume, inside which the basic conductors must be located for correct handling and for subsequent insertion into the slot,
- Fig. 16 shows the positioning of a basic conductor through the loading and insertion device,
- Fig. 17 shows the asymmetry of the lateral feeding and positioning rollers of the basic conductors;

- Fig. 18 shows the inserter with the lateral feeding and positioning rollers free to rotate in the unloaded region of the countermold,
- Fig. 19 shows the input of a basic conductor in the movement of the lateral feeding and positioning rollers, according to an aspect of the invention;
- Fig. 20 shows the section of a leg of a basic conductor;
- Fig. 21 shows different modes for positioning the basic conductors during the action of the lateral feeding and positioning rollers, according to an aspect of the invention;
- Fig. 22 shows the containment volume of Fig. 15 in a view from above,
- Fig. 23 shows a geometric construction for calculating the oscillation of a basic conductor and determining the containment volume of Fig. 15;
- Fig. 24 shows the positioning of a basic conductor without a nib,
- Fig. 25 shows the cycle times in the case of positioning according to solution 2-4 described in an embodiment of the invention;
- Fig. 26 shows a possible embodiment of the countermold for inserting reverse basic conductors (in (a) perspectively and in (b) from above),
- Fig. 27 shows the insertion and handling system for standard and reverse basic conductors,
- Fig. 28 shows the blade system with two different terminations, according to an aspect of the invention;
- Fig. 29 shows the blade contact points of Fig. 28 with the hairpins, according to an aspect of the invention;
- Fig. 30 shows a possible embodiment of the inserter with a blade and a two-body countermold, according to an aspect of the invention;
- Fig. 31 shows a possible embodiment of the inserter with a blade and a two-body countermold, according to an aspect of the invention;
- Fig. 32 shows a view from above of a possible embodiment of the inserter with a blade and a countermold with two bodies, one of which is fixed and one movable, according to an aspect of the invention;
- Fig. 33 shows basic conductors processed in a single inserter with related containment error;
- Fig. 34 shows the effect of the reverse basic conductors on the feeding and positioning rollers, according to an aspect of the invention;
- Fig. 35 shows (in (a) perspectively and in (b) from above) a possible embodiment of the two-part insertion and handling device (together with the loading and handling device), according to an aspect of the invention;
- Fig. 36 shows a possible embodiment of the insertion and handling means in two parts, according to an aspect of the invention;
- Fig. 37 shows the containment of the basic conductor with a lower pitch within a nested one, with indication of the subsequent rotation for the insertion of the conductor with a larger pitch, according to an aspect of the invention;
- Fig. 38 shows the containment of the conductor with pitch greater than one nested at the end of the rotation indicated in Fig. 37, according to an aspect of the invention;
- Fig. 39 shows the different possible movement directions of the countermolds (the latter not shown), according to an aspect of the invention;
- Fig. 40 shows the insertion of a nested basic conductor of the two-part insertion and handling device, according to an aspect of the invention;
- Fig. 41 shows an overall view of the loading, insertion and handling system, according to an aspect of the invention;
- Fig. 42 shows a view from above of the loading, insertion and handling system, according to an aspect of the invention;
- Fig. 43 shows a rear view of the loading, insertion and handling system, according to an aspect of the invention;
- Fig. 44 shows a detail relating to the movement of the lower rods of the chute, according to an aspect of the invention;
- Fig. 45 shows the circumferential position of the joints from above, according to an aspect of the invention;
- Fig. 46 shows the entity of the movement in the described system, for the correct containment of the legs of the various basic conductors, according to an aspect of the invention;
- Fig. 47 shows a view of a further embodiment of the loading, insertion and handling system, according to an aspect of the invention;
- Fig. 48 shows a view from above of a further embodiment of the loading, insertion and handling system, according to an aspect of the invention;
- Fig. 49 shows a rear view of a further embodiment of the loading, insertion and handling system, according to an aspect of the invention;
- Fig. 50 shows different forms of movement of the countermolds of the loading and handling device, according to an aspect of the invention;
- Fig. 51 shows the error on the containment of the basic conductors of the innermost layers with the device of Fig. 50;
- Fig. 52 shows a detail of the loading, inserting and handling system with the presence of an auxiliary nib, according to an aspect of the invention;
- Fig. 53 shows the insertion of a basic conductor into an innermost layer, according to an aspect of the invention;

- Fig. 54 shows the insertion of a basic conductor into an outermost layer, according to an aspect of the invention;
- Fig. 55 shows a view of a possible embodiment of the loading, insertion and handling system, according to an aspect of the invention;
- Fig. 56 shows a possible embodiment of the handling of basic conductors in loading, according to an aspect of the invention; and
- Fig. 57 shows a nib movement mechanism according to a possible embodiment of the handling of basic conductors in loading, according to an aspect of the invention.

It is specified herein that elements of different embodiments can be combined together to provide further embodiments without restrictions by respecting the technical concept of the invention, as an ordinary skilled person will effortlessly understand from the description and as long as they are covered by the appended claims.

Moreover, the present description also refers to the prior art for the implementation thereof, regarding the detail features not described, such as elements of minor importance usually used in the prior art in solutions of the same type, for example.

When an element is introduced, it is always understood that there can be "at least one" or "one or more".

When a list of elements or features is given in this description, it is understood that the finding according to the invention "comprises" or alternatively "consists of" such elements.

When listing features within the same sentence or bullet list, one or more of the individual features can be included in the invention without connection to the other features on the list.

Two or more of the parts (elements, devices, systems) described below can be freely associated and considered as part kits according to the invention.

### Embodiments

### Insertion and handling system

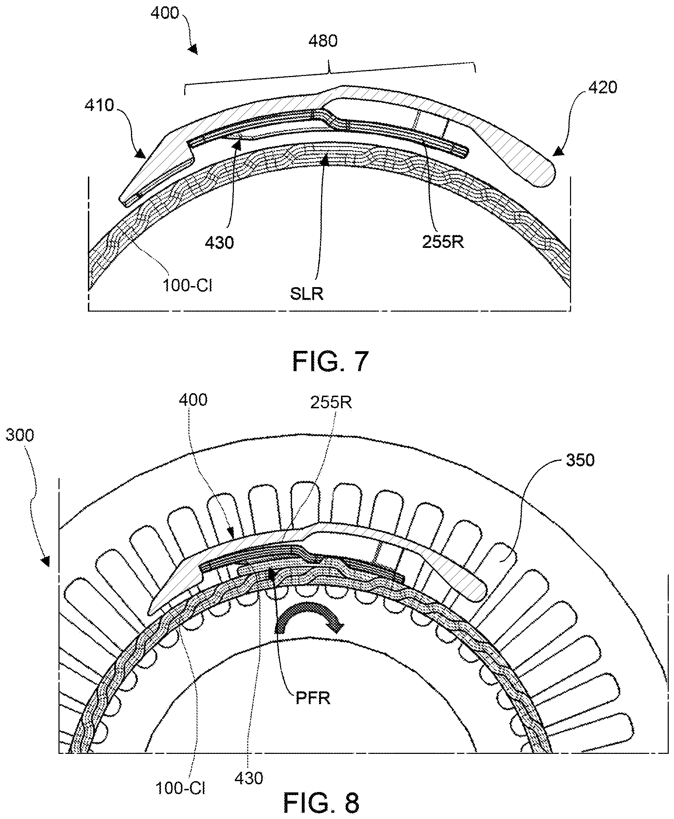

According to a definition of the invention a stator or rotor winding 100 consists of one or more sectors 100-CI, 100-CIN extending circumferentially about a winding axis 50, each sector comprising one or more layers, each layer being consisting of a circumferential arrangement (even partial) of basic conductors (see Figs. 7-10b).

A removable insertion and handling device 400 (e.g., as shown in Figs. 6,7-10,29,30) comprising a wedge-shaped (circumferential) guide and containment end 410, an opposite circumferential containment end 420 and an wedge-shaped internal circumferential end (or "bevel" or "tapered portion") 430 which acts as a guide for the basic conductor to be inserted into the winding. The removable insertion and handling device 400 can be configured to insert all types of hairpins with the exception of I-pins. For basic conductors such as W-pins and parallel hairpins, the removable insertion and handling device 400 can be adapted with appropriate shapings and excavations for the insertion thereof. A basic conductor is inserted into an insertion region and then moved to a destination region in the winding.

The wedge-shaped circumferential guide and containment end 410 is an example of one or more elements with which the removable insertion and handling device 400 is equipped, the one or more elements being configured to produce, upon actuation of the related rotation means, a cam movement of the basic conductors in a radial direction towards the inside and/or outside of the sectors. The guide and containment end narrows, in a plane perpendicular to a winding axis 50, in the opposite direction to the relative rotation direction of the circumferential containment means 300. The wedge-shaped guide and containment end 410 is placed at a predetermined distance from the winding axis 50 of the circumferential containment means 300, so as to guide and contain the basic conductors already inserted into a sector in winding 100-CI and fed towards the removable insertion and handling device 400, upon relative rotation of the circumferential containment means 300.

The removable insertion and handling means 400 of basic conductors, in all embodiments, are means for inserting, displacing and/or orienting (in general, moving) and not for elastic bending: it is not possible to play on the elasticity of the basic conductors because there would be problems of rubbing against other basic conductors. The removable insertion and handling device 400 can further be different for each sector, due to the different dimensions of the basic conductors belonging to the various sectors, or it can be unique with a capacity for dimensional variation.

In fact, although the removable insertion and handling device 400 is illustrated in some figures as consisting of a single block, it will be seen that it is possible to make it in several independently movable blocks for the processing of basic conductors of different dimensions. In this case, the various blocks are moved and then blocked so that the overall geometry of the removable insertion and handling device 400 is fixed during operation of the device itself. As it will be seen, the mutual fixing can be carried out in different manners, through a mutual fixing element or through different elements, which hold the different blocks in a mutually fixed position. The dimensional configurability of the removable insertion and handling device does not change its functionality as described below.

The removable insertion and handling means can be configured to insert the basic conductors along the slots of the containment device and displace the basic conductors inserted into a sector being assembled in the radial direction inwards and/or outwards of said sector.

The removable insertion and handling device 400 is configured (wedge-shaped internal circumferential end 430, see after) so that the previously gradually inserted basic conductors are radially moved from a first angular position with respect to said winding axis, where the basic conductors already inserted into the winding do not yet interfere with the basic conductors being inserted, up to a second angular position with respect to said winding axis corresponding to said respective destination region.

Once the last basic conductor has been inserted into a sector, the removable insertion and handling device 400 is removed. If resized, the basic conductors can be inserted into the respective region of a new sector; otherwise into another removable insertion and handling device differently sized is used in such a region.

In this step, it is advantageous to make sure that the intermediate crown is positioned so that the free reverse space SLR required to accommodate the reverse hairpin is aligned with the axis of the reverse hairpin: reference is made to the so-called "Initial Crown Alignment". In other words, the circumferential containment means and the removable insertion and handling device are mutually positioned so as to define a minimum insertion area of the reverse-type basic conductor in said slots.

When the device 400 is made as a single piece only, the wedge-shaped internal circumferential end 430 is part of a shaped bridge 480 (see Fig. 7 with a view on a perpendicular plane to the axis 50) which joins the two circumferential ends of the removable insertion and handling device 400 and is between two recesses or through holes for insertion in the case of a hairpin. According to an aspect of the invention, the wedge-shaped internal circumferential end 430 is positioned at the leg of the rear basic conductor with respect to the relative rotation direction of the circumferential containment means, the wedge-shaped internal circumferential end 430 widening in the relative rotation direction. This positioning of the tapered portion can be maintained even in embodiments in which the device 400 is not in one piece.

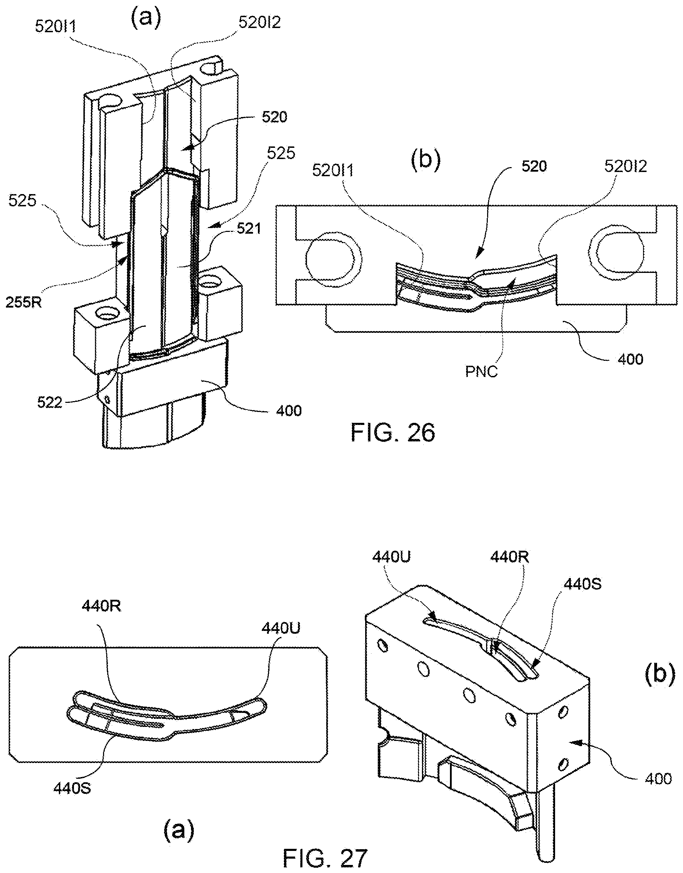

Normally, having placed the reverse basic conductor (optional) first, it is possible to start inserting the basic conductors of the standard type 255, using for example the same device as in Fig. 6 and in Fig. 27, into the inner crown 100-CI. The first thing to do is to correctly position the hairpin at the through opening 440U+440S of the insertion and handling device. The through opening can be, as illustrated, bifurcated to have the possibility of inserting both the standard conductor (into the through opening 400S) and the reverse conductor (into the through opening 400R). There is a first single through opening portion 440U from which the two through openings 440S and 440R dedicated to the standard conductor and the reverse conductor, respectively, depart. Note that 440S and 440R follow the bending directions of the bridge-like connection of the basic conductor in both cases.

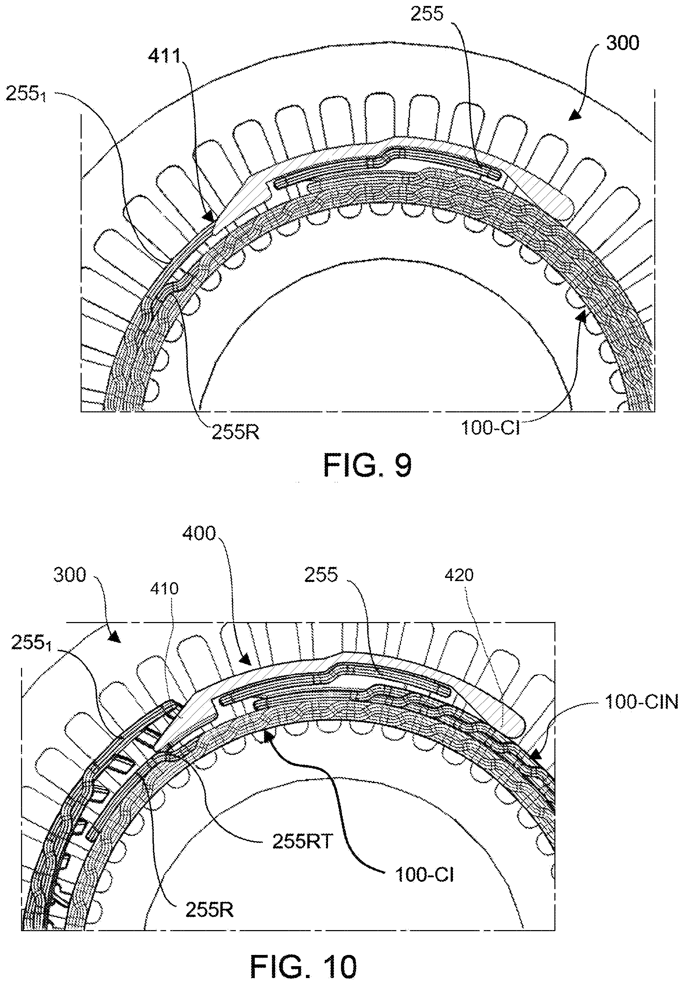

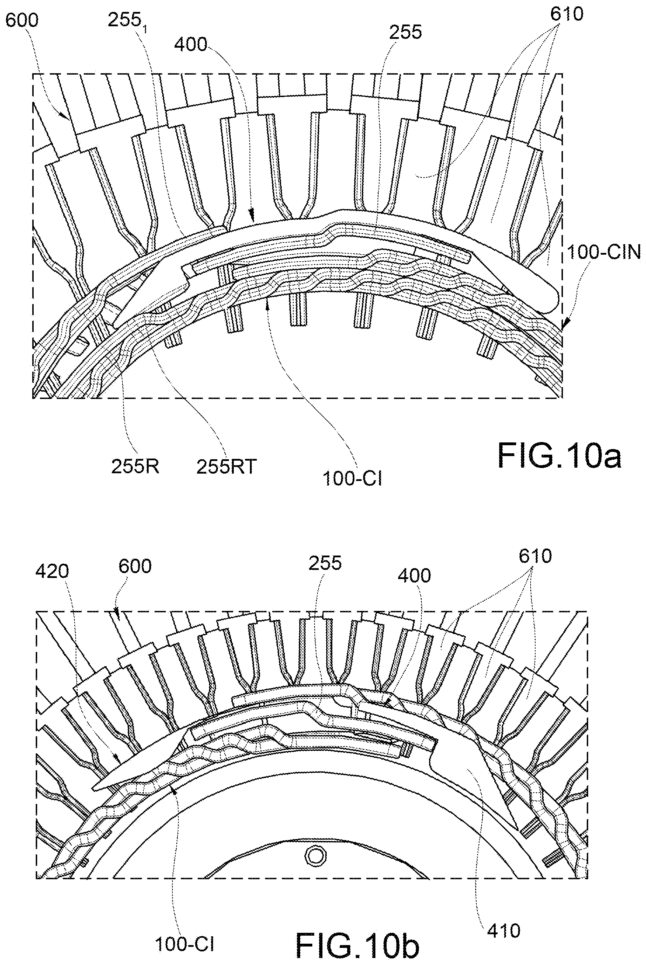

As seen in Figs. 8-10, once the reverse basic conductor has been inserted, the standard ones continue to be inserted, gradually rotating the circumferential containment, until the first conductor inserted into the crown comes into contact with the wedge-shaped guide and containment end 410, which extends the crown being assembled and also contains the bridge-like portion 255RT of the reverse basic conductor 255-R. Fig. 10a shows this even better, with the optional variant of the different circumferential containment system 600 comprising retractable radial elements 610, also known from patent application PCT/IB2023/052123. Fig. 10b shows a similar situation but with the insertion and handling device 400 reversed, i.e., with the wedge-shaped guide and containment end 410 pointing clockwise instead of counterclockwise. In fact, the process can also operate in the reverse direction.

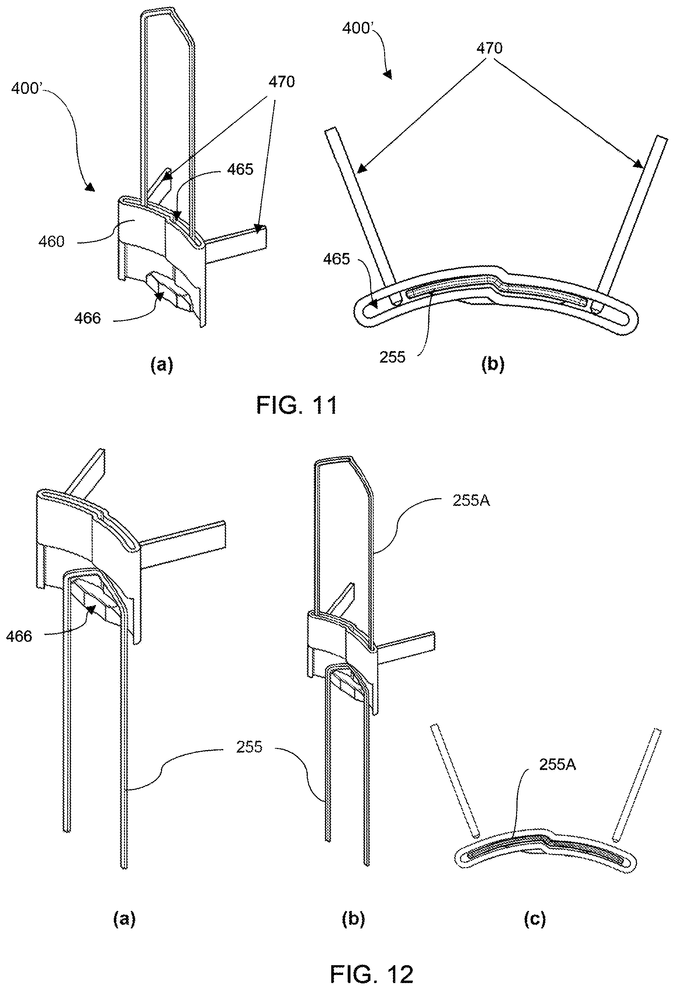

With regard to said nested hairpins according to Figs. 11-13, it is possible to position the standard basic conductor 255 at of a hole of insertion end 465 (represented in the form of a through opening) in an upper insertion end 460 of the removable insertion and handling device 400'. Such an upper part can have a (flattened) sleeve shape.

It is noted that the through opening of the insertion and handling device is sized to accommodate the basic conductor with a greater opening angle (the nested one, in the example case of nested conductors, but a similar recess is provided for any other conductor, see above). In order to make the process repeatable and safe, it is advantageous to provide mobile containment elements (or means) 470, with the unique function of containing the standard basic conductor 255 (with a lower pitch) during the insertion step, penetrating the insertion end 460 (represented as a sleeve). In some cases their absence could lead to the basic conductor being inserted into incorrect "equivalent stator slots". The mobile containment system can include different elements other than 470, not shown here. The average person skilled in the art understands from what has been described that they can have any shape useful for laterally containing the basic conductor with a lower pitch in its insertion.

The nested basic conductors can also comprise more than two hairpins, i.e., a group of hairpins with an increasing pitch in which there is a hairpin with a higher pitch and one or more basic conductors with a gradually lower pitch, which are also nested, i.e., with pitches allowing the nesting.

With reference to Fig. 12 (a) in this step, the basic conductor 255 (with a lower pitch) is inserted, then the movable containment elements 470 are moved back, i.e., before the basic conductor with a higher pitch. It is possible to provide a stop element 466 for the head of the hairpin with a lower pitch.

With reference to Fig. 12 (b) and (c) once the standard basic conductor has been inserted and the movable containments have been retracted, it is possible to position the nested basic conductor 255A.

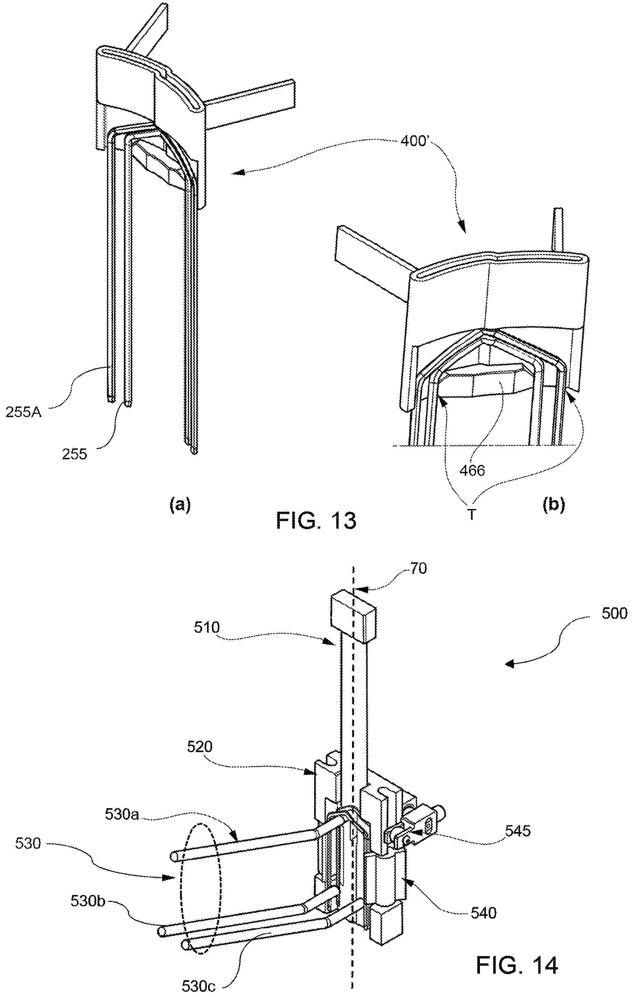

With reference to Fig. 13, the nested basic conductor 255A is then inserted, which stops above the basic conductor with a lower pitch (head-on-head) in the insertion and handling device.

**Loading and handling device**

The removable insertion and handling device 400 described above is part of a larger complex system, referred to herein as a device for loading and handling basic conductors.

The loading and insertion device 500 (or "inserter" or "charger"), shown in Fig. 14, is the system which allows loading, positioning and then moving the single basic conductors in the removable insertion and handling device 400 or 400' (reference will always be made hereinafter to the device 400 to indicate both embodiments in combination with the loading and handling device). The loading and insertion device 500 can also comprise the removable insertion and handling device 400 (401,402) described herein, which sees to the actual insertion and handling of the basic conductor of the winding.

The basic conductors, following the per se known 2D-3D forming process, reach, by means of a transfer system 530 (in one possible embodiment), a containment volume 500R formed as described below.

The loading and insertion device 500 is configured to:

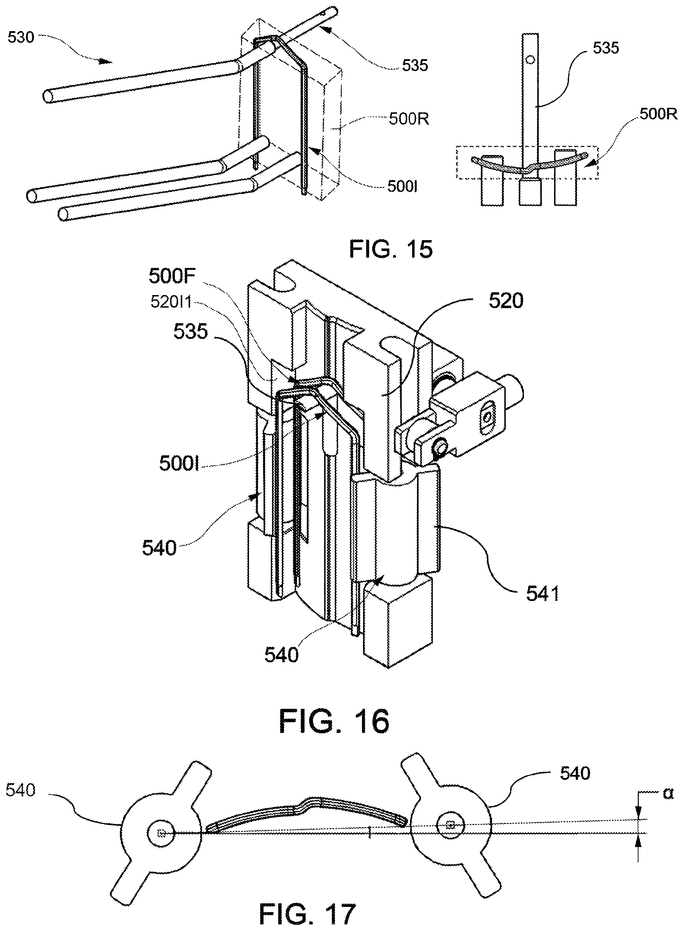

1. Move the basic conductor from a well-defined region of space, which is that of an end volume 500F (see below). In general, by means of the transfer system 530 and with the aid of brushes (not shown in Fig. 14) it is possible to make sure that the basic conductor reaches a defined and repeatable position with a certain margin of error. Such a containment area or volume 500R of the basic conductor is shown in Fig. 15. The presence of the basic conductors in that region is preferably communicated to all the other system components, e.g., through an inductive presence sensor, to ensure automation of the entire system.

2. Position the basic conductor, by means of a radial movement with respect to the winding, in vertical correspondence with the through opening or recesses of the removable insertion and handling device 400 as shown in Fig. 16 where a basic conductor reaches the end area or volume 500F time and time again. This step can be performed through the use of lateral feeding and positioning rollers 540 and/or a contiguous nib 535 moved from the opposite side of the countermold, the nib having the function of supporting the basic conductors along the axis 70 of the inserter (shown in Fig. 14 and actually parallel to the axis 50) while the conductors leave the guides or chutes of the transfer system 530.

3. Insert (or slide) the basic conductors into the removable insertion and handling device 400. Once the basic conductor has been positioned, it can be inserted using a blade 510 as a presser and as containments the lateral feeding and positioning rollers 540 and a countermold 520, see Fig. 14. The blade can also have the function of controlling the transfer of the conductor, since, in the event that the basic conductor falls due to gravity but remains blocked somehow, the blade can release it or even remain blocked and thus signal a malfunction. Moreover, during this step, the nib 535, if present, performs a 90° rotation downwards due to the actuation of appropriate gears 545 (to the right in Fig. 14), which in turn can be moved by the motion of the blade or for example by utilizing the rotary motion of the lateral feeding and positioning rollers. In general, the nib can be retracted in various manners, even linearly.

As shown in Fig. 17, the lateral feeding and positioning rollers 540 can be arranged so that the straight line passing through the respective centers is not perpendicular to the radial direction, but has an inclination $\alpha$. Such an inclination corresponds to the bend in the head portion of the basic conductor. The rollers thus thrust the basic conductor uniformly in the processing step. This ensures that the rollers can be mutually the same. Conversely, the arrangement of the centers on a horizontal line results in two different geometries.

In a particular embodiment of the loading and insertion device, the lateral feeding and positioning rollers can rotate regardless of the position of the blade 510 and due to the presence of vents 525 on the countermold (see Fig. 26). A vent means a lateral hollow in the countermold for the rotatable positioning of the rollers. In the embodiment illustrated the rollers have continuous fins 541 180° from one another.

For example, by choosing the rollers about 50 mm long, the countermold has a hollow of at least the same amount in the vertical direction (parallel to the axis 70, which is normally parallel to the winding axis 50, in use). Although this solution is functional, a problem that could arise in the insertion of the basic conductor is the possible deformation thereof following the thrust of the blade. The blade 510 only works after the basic conductor has reached the end volume 500F above the removable insertion and handling device 400, to allow it to be then housed in the winding by the rotation of the circumferential containment means.

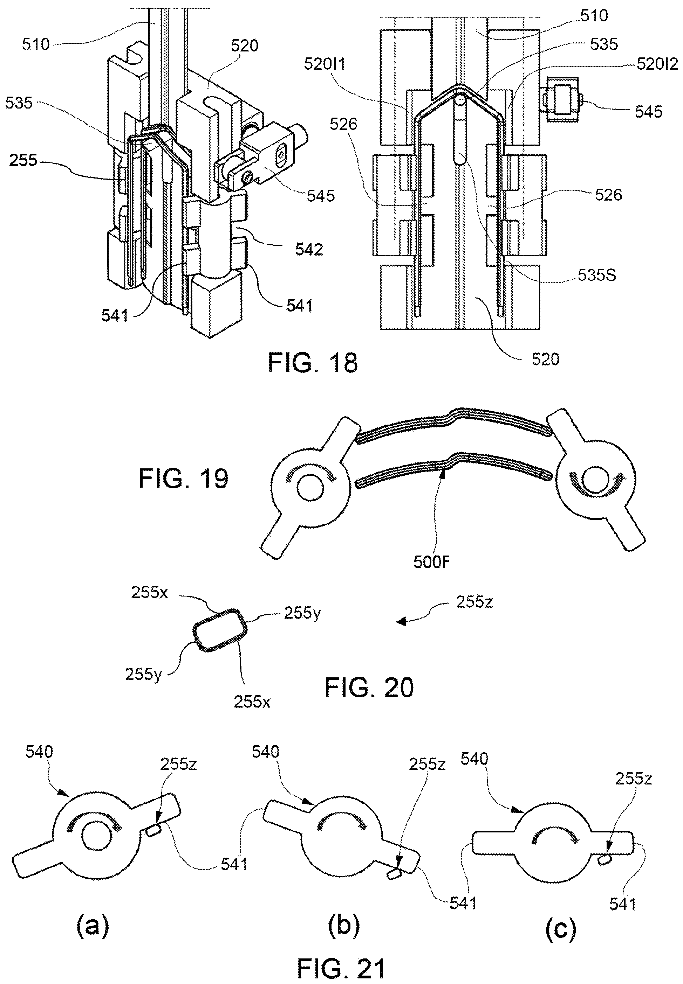

In order to obviate this problem, it can be useful to adopt a different geometry of the roller fins. In particular, with reference to Fig. 18, there can be four fins two by two at 180°, each pair being spaced apart by an empty central space 542. The empty space 542 can have a corresponding raised element on the countermold 520, thus improving the containment of the basic conductors and increasing the strength of the countermold itself. It can be noted that reliefs 526 are provided on the countermold in the region of empty space between the fins of the lateral feeding and positioning rollers.

**Positioning of the basic conductors in presence of the nib**

With reference to Figs. 16-21, the basic conductors, once brought into the containment volume, (which can be defined with and without a nib, see below) are conveniently guided at the through opening or recesses of the removable insertion and handling device 400 and therefore an initial theoretical position 500I and a final position 500F (also referred to as the "end volume" occupied by the basic conductor ready to slide down) can be defined inside the containment volume.

The positioning of the basic conductors from the initial theoretical position 500I to the end volume 500F in the presence of the nib 535 can occur according to a rotational and non-translational motion (with the lateral feeding and positioning rollers); in fact, it is thus possible to increase the speed of the overall system, increasing the angular positions of the feeding roller fins and positioning of the basic conductors. Different positioning modes can be devised, which differ for the different contact between the roller fins and a strip 255z. In general, the term strip identifies the section of a leg of a basic conductor, shown in Figs. 20,21, which comprises for example connecting spokes or connected edges 255y of the extending surfaces or parallel surfaces 255x.

In a first positioning mode, for example, the first contact of the basic conductors or entry occurs by utilizing the connecting spokes of the strip 255y, while the external containment is ensured by the physical contact of the roller fins 541 with the larger surfaces 255x of the strip, as illustrated in Fig. 21(a) which represents the final position of the basic conductor.

In a second positioning mode, the first contact of the basic conductors or entry occurs by utilizing the largest surfaces 255x of the strip, while the containment is allowed by the "point" contact of the roller fins 541 with the connecting spokes 255y of the strip, as illustrated in Fig. 21(a) which represents the final position of the basic conductor.

In a third positioning mode, the uniform contact between the roller fins 541 and the extended surfaces 255x of the strip is in the middle between the final position and the initial position, as shown in Fig. 21(c) which instead represents the final position of the basic conductor.

There can be advantages and disadvantages in the various situations just described, but the basic advantage of the invention is that of being capable of positioning the rollers so that the initial contact of the strip can be any but such as to ensure that the final containment position is always either on the long side or on the short side of the strip.

**Initial theoretical position and region of uncertainty**

As mentioned above, the basic conductor, before being positioned at the through openings 440U, 440S,440R of the removable insertion and handling device 400, is conveniently located in a position possibly coinciding with the initial theoretical position 500I. The positioning in the initial theoretical position of the basic conductor can be made possible due to the presence of the suitably sized transfer system 530 and with the aid of braking systems, for example of the brush type.

In reality it happens that the basic conductor a can occupy different positions, always within a volume (of containment or processability) based on the possible maximum deviations defined by the transfer system. It is thus possible to know and define the maximum deviations and the various initial positions that the basic conductor can take in order to ensure the processability thereof in the subsequent operations.

The possible positions that the basic conductor can take at the beginning can be associated with a bundle of straight lines passing through a single point equal to the midpoint of the conductor in the initial theoretical position seen from above.

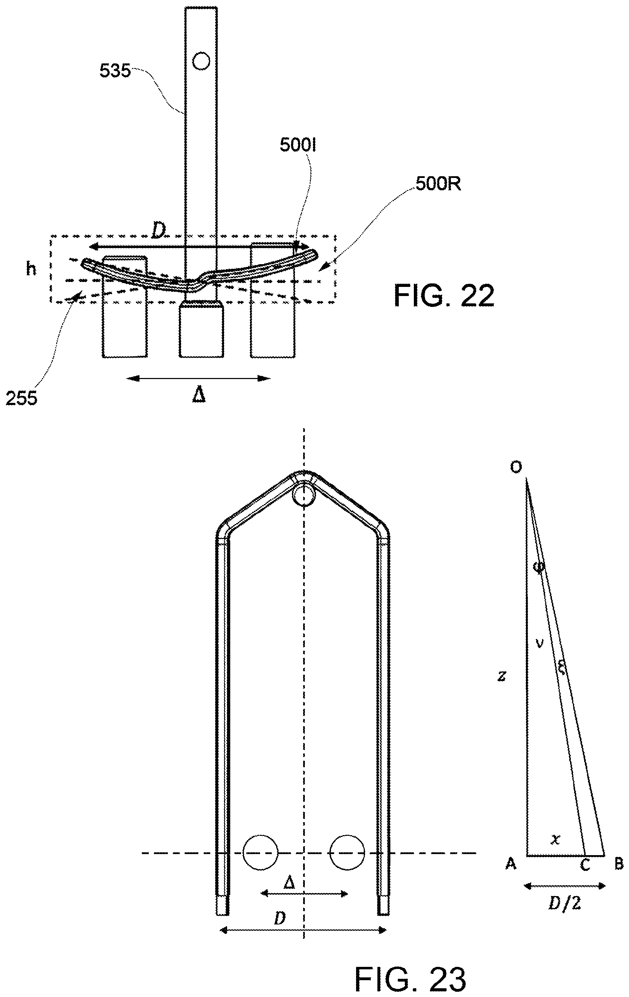

The size of the section of the containment volume, in terms of height h of the rectangle in Fig. 22, is related to the difference between the distance D between the centers of the legs of the strip in the theoretical initial position with respect to the quantity $\Delta$, equal to the distance between the centers of the two lower guides 530b, 530c of the transfer system 530.

By virtue of this schematization, it is possible to size the chute which allows the correct positioning of the basic conductors in the initial theoretical position 500I. In the detail of the schematization, the magnitude D is influenced by the forming process and by the length of the basic conductor and in general presents an error.

There is another type of variability due to the oscillations of the basic conductors along the chute which supports the head of the conductor, as shown in Figs. 23-24. These are oscillations which can, however, be controlled by suitably choosing the dimensions of the upper guide, with a schematization similar to the one provided. Such a variability can be taken into account when defining the containment volume.

**Positioning of basic conductors in the absence of the nib**

In a possible embodiment of the invention, the loading and handling of the basic conductors can be performed without the use of the nib 535.

In the absence of the nib, it is preferable that the transfer system 530 is positioned near the countermold 520, so that the basic conductor does not fall due to gravity before being positioned at the removable insertion and handling device 400.

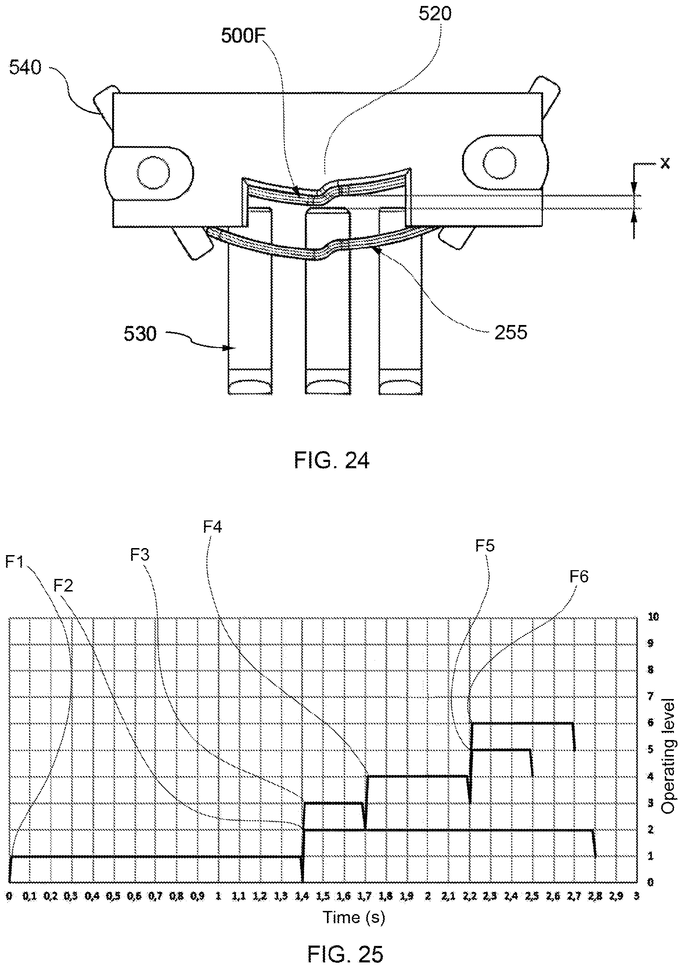

In the event of using the nib, the minimum distance $x_{min}$ between the nib and the countermold could conveniently be equal to the height $H_{piattina}$ (i.e., smaller thickness than the section) of the strip 255z, as shown in Fig. 24. It follows that:

$$x_{min} = H_{piattina}$$

In practice it is convenient to leave a margin of safety $\varepsilon$, such that:

$$x = H_{piattina} + \varepsilon \quad \text{con } \varepsilon > 0$$

Instead, with the absence of the nib, the basic conductor, over a feeding segment equal to x, is not supported in the vertical direction, but is only contained laterally and guided by the motion of the lateral feeding and positioning rollers 540.

As for the modes for positioning the basic conductors and the evaluation of the containment volume, the same considerations made above for the loading and insertion device 500 are valid in the presence of a nib.

**Cycle time of the loading and insertion device**

The cycle time of the loading and insertion device 500 can vary according to different possible embodiments being not always part of the invention:

I. In a first embodiment, referred to as the case 1, the lateral feeding and positioning rollers 540 which allow feeding the basic conductors perform a unidirectional and opposite rotary motion with respect to each other; in other words the lateral rollers rotate 360° (ending the rotation after the basic conductor has slid vertically);

II. In a second embodiment, referred to as the case 2, the lateral feeding and positioning rollers 540 which allow feeding the basic conductors perform an alternating and opposite rotary motion with respect to each other; in other words, the lateral rollers rotate within an interval of less than 180°;

III. In a third embodiment, referred to as the case 3, the blade 510 which ensures the vertical movement (insertion into the device 400) of the basic conductor thrusts on about 2/3 of the upper surface of the basic conductor, so that the motion of the lateral rollers and of the blade can always occur simultaneously without any obstacle;

IV. In a fourth embodiment, referred to as the case 4, the blade 510 which ensures the insertion of the basic conductor thrusts on the entire upper surface thereof; in this case the motion of the lateral rollers and that of the blade cannot always occur simultaneously due to mechanical interference issues.

A preferred embodiment of the invention provides with the assumptions listed above the cycle times shown in Fig. 25, with the basic conductor feeding step F1 and F2, the basic conductor positioning step F3, the blade descent step F4, the idle lateral roller rotation step F5 and the blade ascent step F6. Such an embodiment combines the case 2-4, i.e., the case in which the rollers rotate by an angle smaller than 180° (both the positioning and the idle rotation of the rollers occur by sweeping the same angle $\phi$) and the case in which the blade thrusts only on 2/3 of the upper surface of the basic conductor, so that the motion of the blade and the rollers can occur simultaneously. Such an embodiment is advantageous both in terms of a shorter duration of the cycle time of the loading and insertion device 500 and for a smaller surface that is in contact with the basic conductor during guiding and insertion, reducing the risk of possible damage to the basic conductors and their coating. The following values were obtained in a laboratory test (see Fig. 25):

|  | **Step description** | **Time [s]** |
|---|---|---|
| F1/F2 | Basic conductor feeding | Every 1.4 |
| F3 | Positioning of the basic conductor by rollers | 0.3 |
| F4 | Insertion of the basic conductor by blade descent | 0.5 |
| F5 | Idle rotation $\Phi$ of the rollers (case 1) | 0.3 |
| F6 | Idle rotation $\Phi$ of the rollers (case 2) | 0.2 |
| F7 | Blade ascent | 0.5 |

## Management of reverse basic conductors

As previously described, the removable insertion and handling device 400 is configured to insert both standard basic conductors 255 and reverse basic conductors 255R. We now describe how the basic conductor loading and insertion device 500 is configured to guide both standard and reverse basic conductors towards the removable insertion and handling device 400.

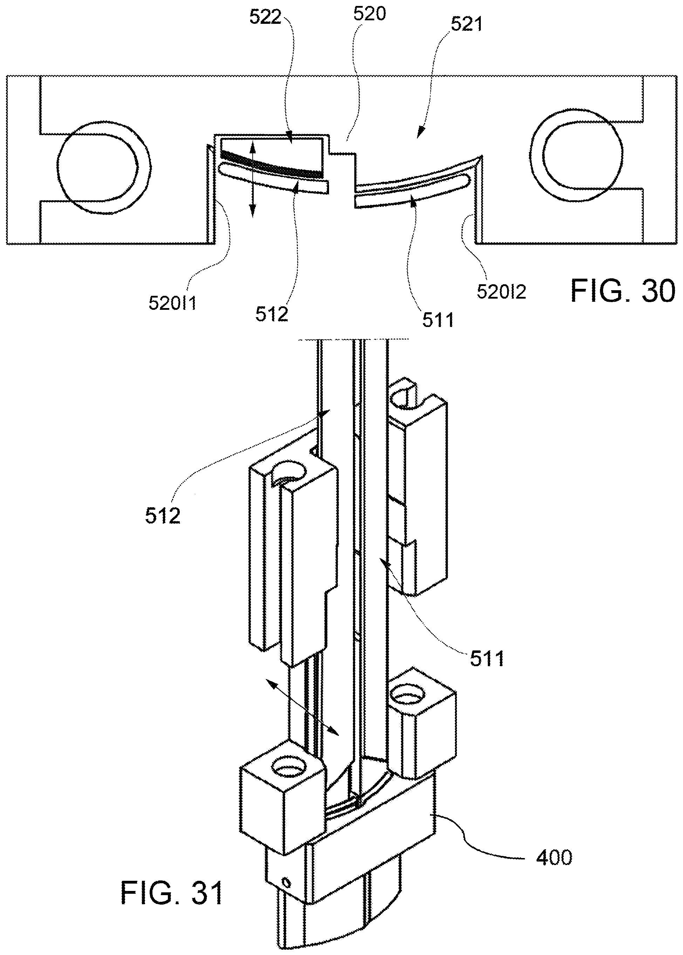

In order to contain both standard and reverse basic conductors completely (i.e., over the entire opening angle of the basic conductor), the countermold 520 can comprise two bodies configured to move with respect to each other, as shown in Fig. 30. A first countermold body 521 can for example be fixed in space (the body associated with the common portion of the two standard and reverse basic conductors, corresponding to the through opening 440U, of the removable insertion and handling device 400), while a second countermold body 522 is movable (the body corresponding to the through openings 440S and 440R of the removable insertion and handling device 400, as shown again in Fig. 27) and can move forward or backward depending on whether what is being processed is a standard or reverse basic conductor. It is also possible that the first and second countermold bodies 521,522 can both be movable independently to form the containment volume 530R required to accommodate the basic conductors time and time again. Such a containment volume in this example can be defined between the first and second countermolds bodies 521, 522 and the sidewalls 520I1 and 520I2 thereof which can be the walls of the single block countermold 520 in the corresponding embodiment. The containment volume is defined with respect to the legs of the basic conductors, the bridge connection being capable of protruding from this volume.

In this embodiment, the blade 510 of the loading and handling device can be configured to thrust both the basic conductors into the respective recesses 440U, 440S, 440R, and can comprise a fixed blade section 511 and a movable blade section 512, as shown in Fig. 30. Here too, the blade 510 can comprise both the movable sections 511, 512.

Some possible embodiments not always part of the invention are shown below which combine different solutions for guiding and inserting both standard basic conductors and reverse basic conductors.

### Solution 1

Again with reference to Figs. 26-29, we now describe a first embodiment, not part of the invention, for guiding and inserting standard and reverse basic conductors. Such a first embodiment can comprise:

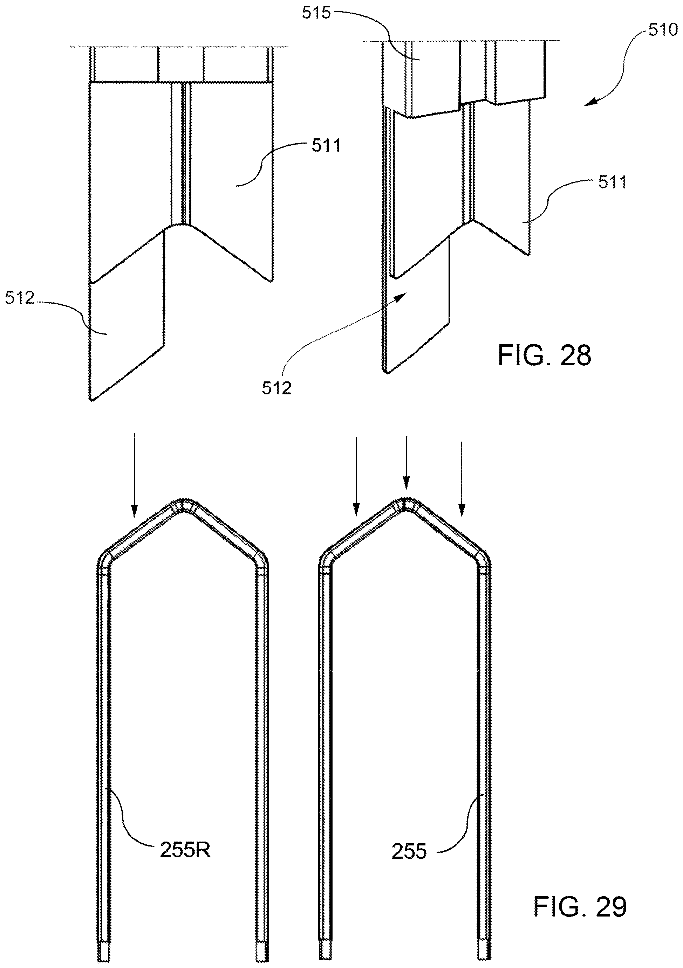

- A countermold 520 made as a single body and with a shape that follows the shape and curvature of the basic reverse conductors (therefore for the standard ones there is an uncontained part PNC);
- A blade 510 such as to have two parallel terminations 512 and 511, one for a reverse basic conductor and one for a standard basic conductor, respectively, so as not to interfere with the insertion system nor even with each other. Fig. 28 indicates with 515 a blade reinforcement element.

In this first possible embodiment, the part of the blade which thrusts the reverse basic conductor has a greater length than the part which inserts the standard basic conductor, so that when the blade system is fully raised and the standard basic conductors have to be inserted, it is the blade itself that takes the function of containing standard basic conductors for about half the opening angle of the conductor. Moreover, the part of the blade that is common to both basic conductors has the vertical length equal to the termination of the blade relating to the insertion of the standard basic conductor; the insertion of the standard basic conductors is thus facilitated without any obstacles.

It is apparent that while the reverse basic conductor is contained along its entire length over the entire opening angle, the standard basic conductor is completely contained only for half the opening angle; in the other half it will be contained by the blade but not along the whole length of the basic conductor (for example, for the first 20-30 mm, measured from the head of the basic conductor).

As shown in Fig. 29, in this first embodiment, the reverse basic conductor, due to how the blade structure has been chosen, is thrusted only through half the opening angle of the conductor itself and not over the entire surface of the head as occurs instead for the standard basic conductor.

In other advantageous embodiments, the blade has a shape with a thickness such as to thrust into one or more points of each type of basic conductor.

### Solution 2

Figs. 30-32 show a second embodiment being part of the invention for the guide and insertion of standard and reverse basic conductors. Such an embodiment can comprise:

- A countermold 520 comprising two separate bodies: a fixed first and second countermold body 521 and a movable countermold body 522;

- A blade 510 comprising two separate bodies 511, 512 (see Fig. 30); or alternatively a body with a geometry such as to enter between the first and second countermold bodies 521 and 522 and simultaneously thrust the basic conductors during the insertion step at a cusp of the head portion.

In this possible second embodiment, the movable part of the countermold and therefore also of the blade are actuated in relative motion with respect to the removable insertion and handling device 400, which is fixed.

The blade can insert the basic conductor by thrusting it on a portion of its head or along the entire arc of its head, and this applies both to the standard basic conductor as well as the reverse one.

Due to the presence of a two-body countermold system and a two- or one-body blade, such a solution allows the correct and total containment of both the basic reverse and standard conductors.

**Solution 3**

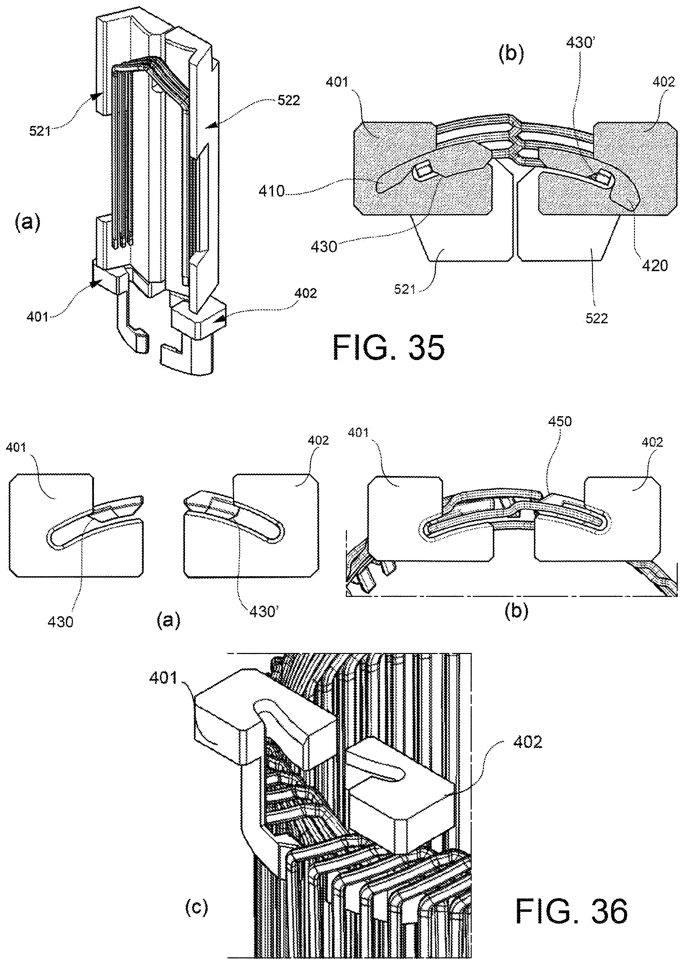

Fig. 35 shows a third embodiment being part of the invention for guiding and inserting standard and reverse basic conductors, in which the countermold is in first and second countermold bodies 521, 522 which are movable independently of each other, in order to adapt to the various basic conductors to be loaded and handled time and time again (even with different crowns). The insertion and handling device 400 is also shown.

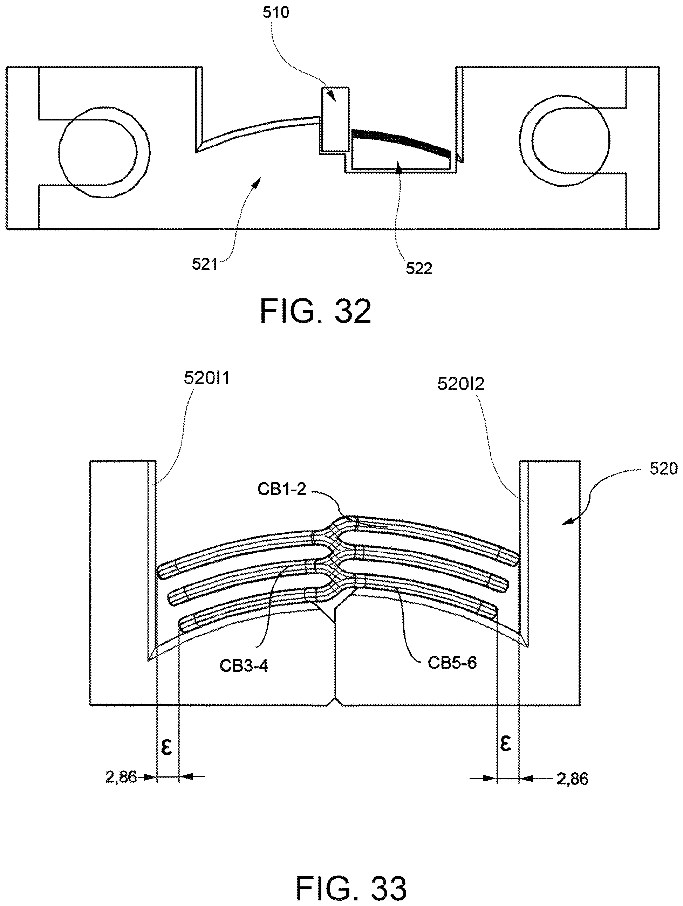

Fig. 33 shows how it is possible to process all the crowns of a winding through a single loading and insertion device with two independent bodies. This innovative solution avoids using multiple loading and handling devices, introducing a specific movement of the entire loading and handling device, so that they are positioned instant by instant on the layers of the crown to be formed. With the same opening angle of the basic conductor, the basic conductors located in the outermost layers will tend to have a greater circumferential size: it is precisely these that determine the dimensions of the countermold. Fig. 33 shows different layers of reverse basic conductors contained inside the countermold 520. It is noted that the basic conductors located in the outermost layers are well contained laterally by the countermold while the basic conductors located more internally have a greater lability. There is therefore an error $\varepsilon$ which depends on various factors including: the height of the strip, the number of strips in a single slot, the height of the stator slot and the opening angle of the basic conductor.

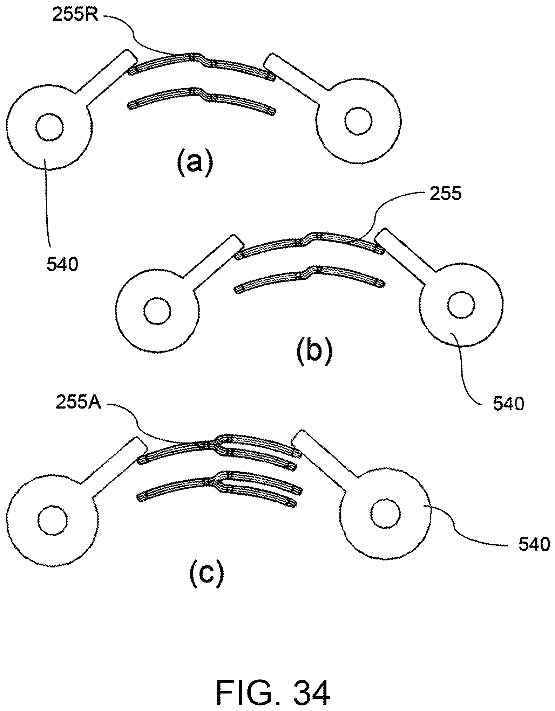

In such embodiments, lateral feeding and positioning rollers can be used, as described above and resumed below, suitable for moving the basic conductors being loaded towards the countermold, being able to move both standard and reverse basic conductors, as shown in Fig. 34.

Returning to Fig. 33, according to an aspect of the invention the countermold or loading and insertion device can be divided into two independent parts. In this possible embodiment, the loading and insertion device translates in the radial direction with respect to the center of the stator pack. In other cases it could translate along an axis which passes through the center of the loading and insertion device 500 (also called "loader") and is perpendicular to the axial direction. The various movements are better illustrated below with reference to the nested basic conductors (see below), but it should be understood that they are individually applicable to various situations where necessary.

It should be noted that, the basic conductors are thus well contained and it is possible to process all types of basic conductors (with the same angular opening) for each crown.

**Two-body insertion and handling device**

With reference to figures 35, 36 and 40, with regard to the removable insertion and handling device 400, it too can consist of two independent bodies integral with the two bodies of the loading and insertion device, as shown in Fig. 35. The same elements as above are provided, such as the wedge-shaped guide and containment end 410, the opposite containment end 420, the wedge-shaped internal circumferential end 430 for moving the basic conductor upon rotation of the circumferential containment, and optionally a further wedge-shaped internal circumferential end 430' similar to the wedge-shaped internal circumferential end 430 if the device is made in a more symmetrical manner, being able to serve in both directions of circumferential movement. In this case, the end 420 will be shaped in a functionally similar manner to the wedge-shaped guide and containment end 410.

In this case, the thruster blade 510 also comprises two independent bodies (not shown) which extend in the axial direction of the winding, each blade body being configured to thrust said basic conductors at least on a portion of the head and to be configurable by independently rotating about said axial direction, or moving radially as described above.

It is apparent that the geometry of the part of the wedge-shaped guide and containment end 410 (towards the winding) of the removable insertion and handling device 400 is linked to the geometry of the strip and to the opening angle of the basic conductor. Furthermore, the geometry of the removable insertion and handling device 400 can be such as to allow housing the basic conductors during the rotation of a hollow pitch with simultaneous rotation of the basic conductor.

In this case, there can be interferences between basic elements and conductors which can be conveniently avoided by providing one or more suitable bevels with respect to the section of the device. In figure 36(b), in the top right, it can be seen how the jamming with the sector already inserted and moved radially is avoided by means of a chamfer 450.

**Management of nested basic conductors**

We now describe several possible embodiments for managing the nested basic conductors 255A in the presence of a single loading and insertion device 500 comprising two independent first and second countermold bodies 521 and 522.

*1st Scenario*

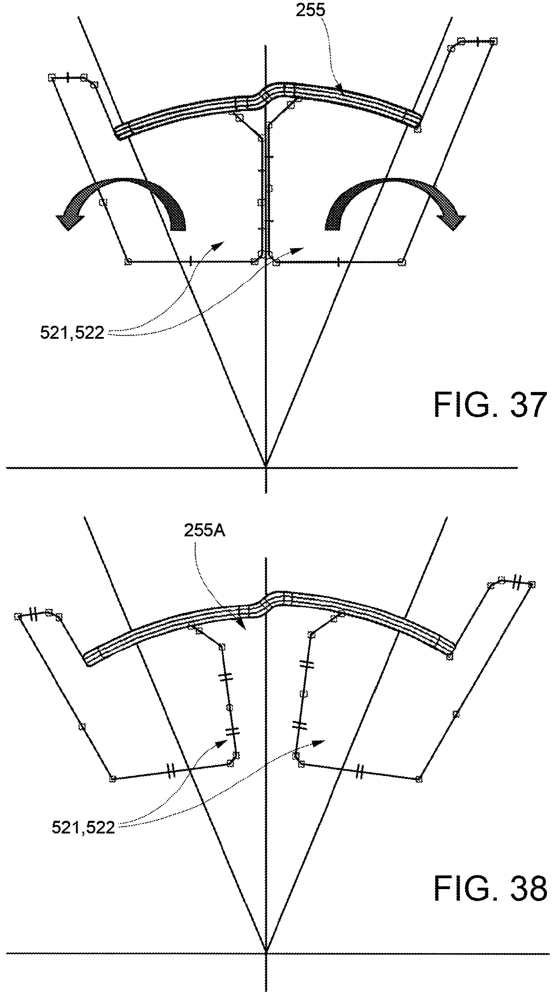

In a first, not part of the invention, of the loading and insertion device 500, the independent first and second countermold bodies 521 and 522 can rotate and in particular can perform opposite rotations to each other, as shown in Figs. 37 and 38 for the containment of a standard/reverse basic conductor and for the containment of a standard/reverse basic conductor of different layers. This type of movement allows the basic conductors to be contained in a safe and repeatable manner.

*2nd Scenario*

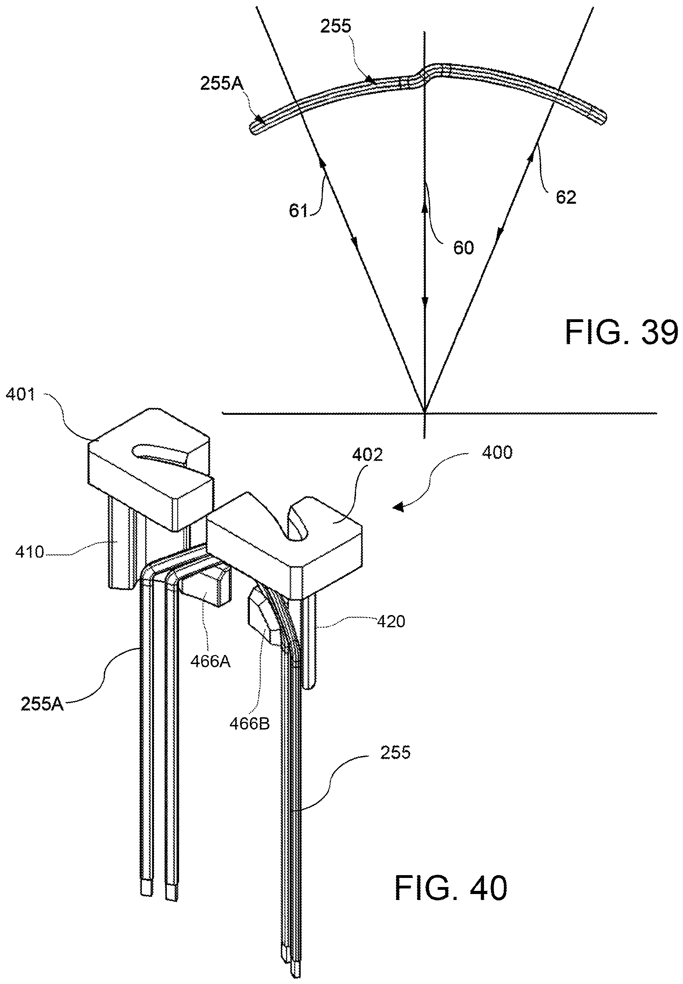

In a second embodiment shown in Fig. 39, the independent first and second countermold bodies 521 and 522 of the loading and insertion device 500 (not shown for simplicity) can move through two linear movements along a first straight line 61 and along a second straight line 62 forming an equal angle with a central straight line 60 perpendicular to the axis 70 and coinciding with the radial direction with the same displacement obtainable by related displacement means.

*3rd Scenario*

In a third embodiment, still with reference to Fig. 39 and to Fig. 37, the movement lines 61 and 62 of the independent first and second countermold bodies 521 and 522 can be chosen at the opening angle of the nested and non-standard basic conductor. The two first and second countermold bodies 521 and 522 of the inserter thus have the possibility to move along these two straight lines (the rotation in Fig. 37 of the two elements also has the effect of containing the internal basic conductor).

The insertion of the two basic conductors according to the nested standard sequence can occur individually and thus sequentially or simultaneously.

The simultaneous insertion of two basic conductors is advantageous as the legs of the nested basic conductor, above the standard basic conductor, are angularly contained.

Fig. 40 provides an example of a removable insertion and handling device 400 in two parts for the insertion of nested basic conductors. A stop element 466A,466B is provided in two parts for the two bodies, which serves to stop the head of the conductors, but has suitable bevels which allow the basic conductors to slide radially upon rotation of the circumferential containment.

**Final Assembly**

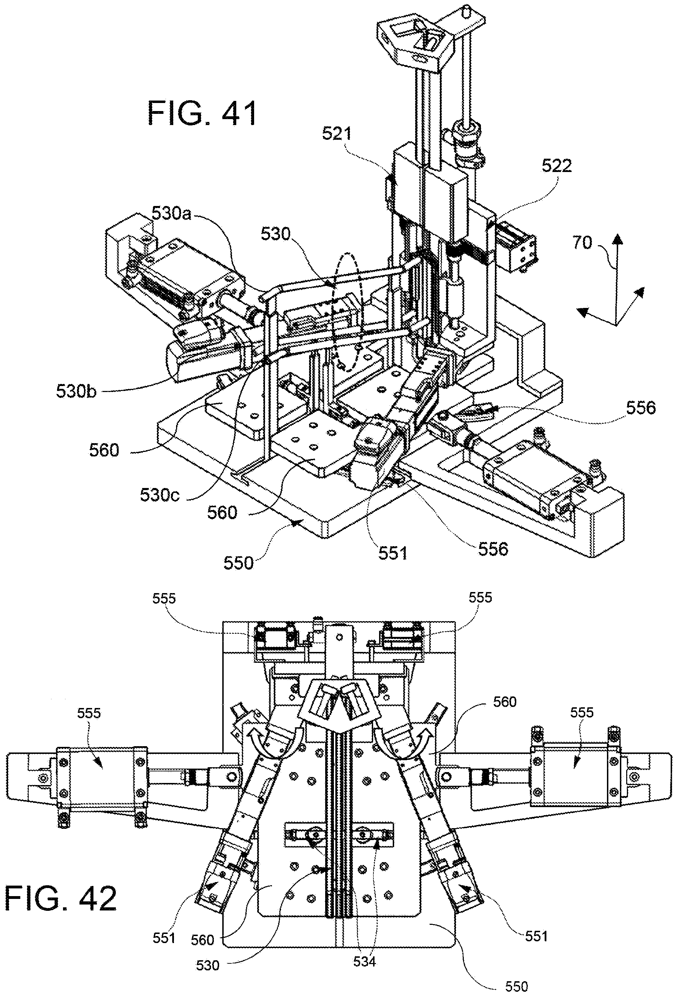

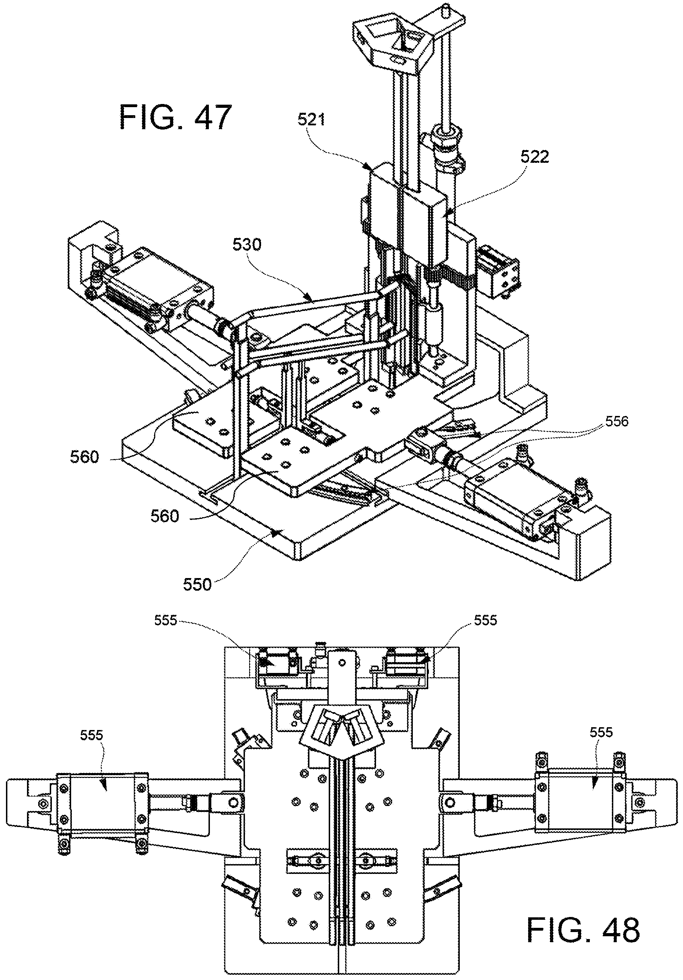

By combining all the concepts above, the loading and insertion device 500 can be as shown in Figs. 41-45, 47-49. The loading and insertion device 500 can comprise:

- a 550 baseplate oriented perpendicular to the axis 70, allowing the whole loading and insertion device 500 to translate in the axial direction, with respect to the stator pack. This movement is advantageous every time the forming of a crown of the winding starts and finishes;
- a transfer system 530, in which the above nib 535 is absent but can be provided;
- first and second countermold bodies 521, 522 of the inserter that can move in the radial and circumferential direction by means of radial electrical axes 551, of a pneumatic cylinder 555 and curved guides 556, allowing standard, reverse and nested basic conductors to be processed on all the crowns in a single system.

More details are provided below.

**Basic conductor transfer system**

We will now describe how it is possible to create a basic conductor transfer system 530 which is versatile, such as to accommodate and process standard, reverse and nested basic conductors, regardless of the crown to which they belong.

The transfer system 530 of the basic conductors can comprise three rods: an upper guide 530a, and two lower guides 530b, 530c, such as to appear in section at the vertices of a triangle.

The upper guide 530a is integral with the base plate and supports the basic conductor from its cusp. The other two lower chutes are always integral with the baseplate, but by means of a guided system 534, so as to allow them to translate, if it is necessary to process a product including nested basic conductors.

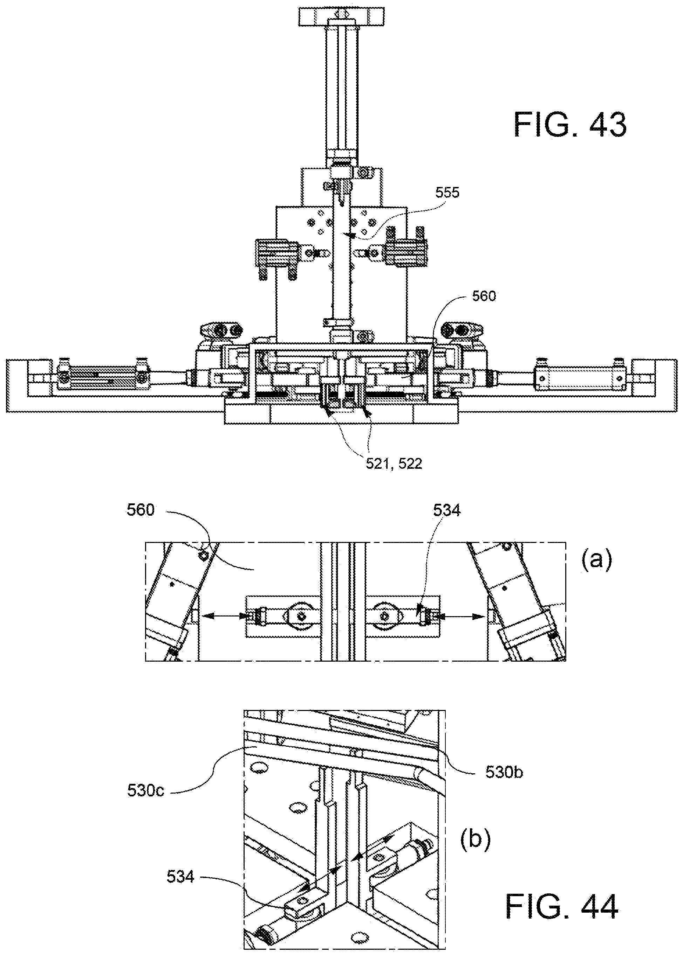

Fig. 44 shows how the handling (i.e., the horizontal movement - on plane XY) of the two lower guides 530b,530c occurs, which guide the legs of the basic conductors. The ball joints 534 are provided to perform such a movement. Moreover, there can be provided a system which allows the distance between the two lower rods of the chute to be adjusted, at least in the transition from a standard basic conductor to a nested basic conductor. In fact, it is noted that the magnitude of the movement is greater, the further the ball joints are mounted from the center of the stator pack.

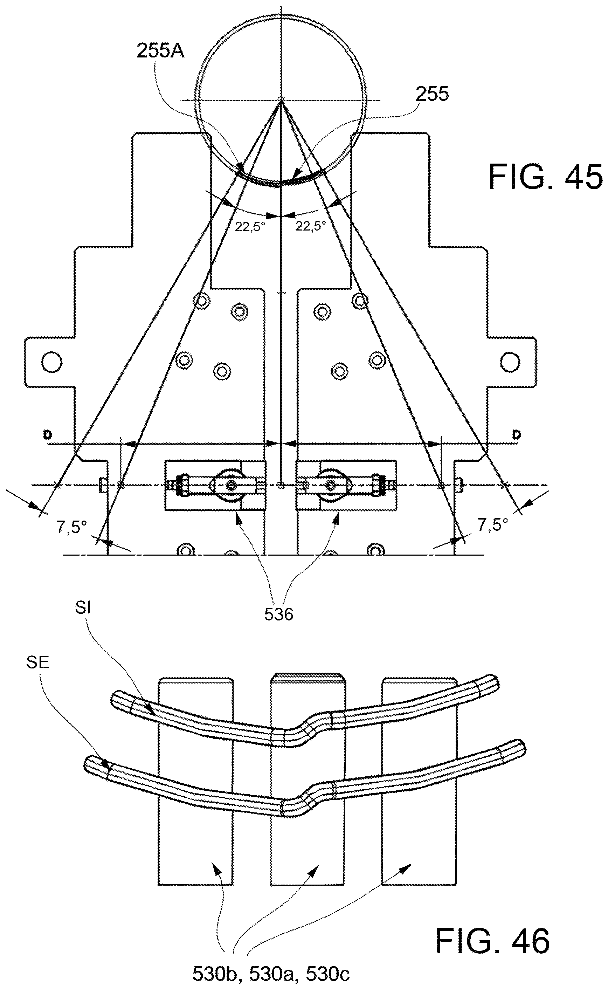

The quantity D depends, as can be seen from Fig. 45, on the circumference on which the joints 536 are mounted. In the transition from a standard basic conductor to a nested one, this quantity must be calculated taking into account the circumferences of the two innermost layers, as represented above in Fig. 45. The joints should potentially be mounted on these curves; if they are mounted on much larger diameters, for reasons of space, it is inevitable to consider limitations in terms of movement, for example through a system with abutments and springs.

It is noted that, with a static configuration of the system, in passing from one crown to another more external one, the transfer system 530 does not undergo any movement, therefore the lower guides 530b, 530c will contain less the legs of the basic conductors the more the displacement towards the proximal diameters (SI) starting from the axis towards that of the outermost layer (SE), as apparent in Fig. 46.

In a specific configuration according to the invention, the transfer system 530 of the basic conductors can be integral with the baseplate, and regardless of the type of basic conductor processed (standard, reverse or nested), the rods of the chute can be chosen with a length such as not to hinder the insertion of the outermost basic conductors of the winding (those belonging to layers 1-2). As a result, the basic conductor belonging to the innermost layers (layers n and n-1) will leave the chute sooner; in this situation the basic conductor is not constrained or supported vertically and is therefore free, except for the presence of the lateral feeding and positioning rollers, which can prevent it from falling towards more external diameters.

Alternative embodiments to this first solution for the transfer and handling of the basic conductors can be devised, as follows:

- A first alternative embodiment includes the compensation for the distance through movement of the chute along the radial axis.
- A second alternative embodiment includes the introduction of a nib 535 actuated by a two-position pneumatic cylinder or, through a suitable mechanism, by the actuator which actuates the blades, leaving the baseplate only to move in the direction 70.

**Compensation through movement of the chute**

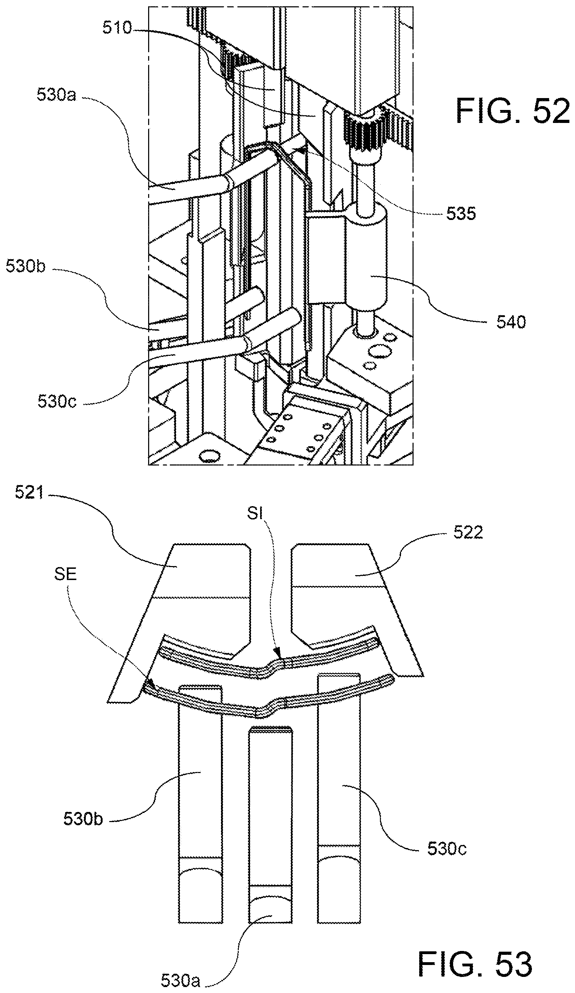

An alternative embodiment for the transfer and handling of the basic conductors is shown in Figs. 53-57.

As the transfer system 530 of basic conductors slides with respect to the baseplate, it is possible to bring each basic conductor closer to the countermolds at will and by the same amount, regardless of the crown that is being formed, facilitating the feeding of the basic conductors towards the bodies of the loading and handling device, by means of the lateral feeding and positioning rollers, without hindering the fall of the conductors themselves into the removable insertion and handling device 400.

The pneumatic cylinders 555 for moving the plates 560 can be replaced with electric actuators.

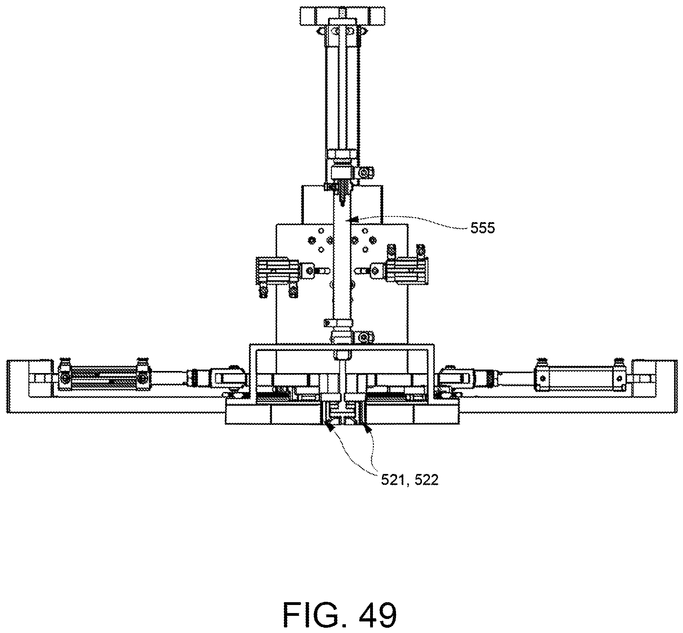

In this case, unlike what happened in the previous solution, the positioning of the countermolds and thus of the loading and insertion device 500 occurs by utilizing two movements and no longer just one: in the previous case, as can be seen from Fig. 42, through the two electric axes, it was possible to be positioned correctly on each crown, once the opening angle of the basic conductor to be processed was fixed; with this new configuration, instead, this displacement can be reproduced by utilizing a translation and a rotation, as shown in Figs. 49-50.

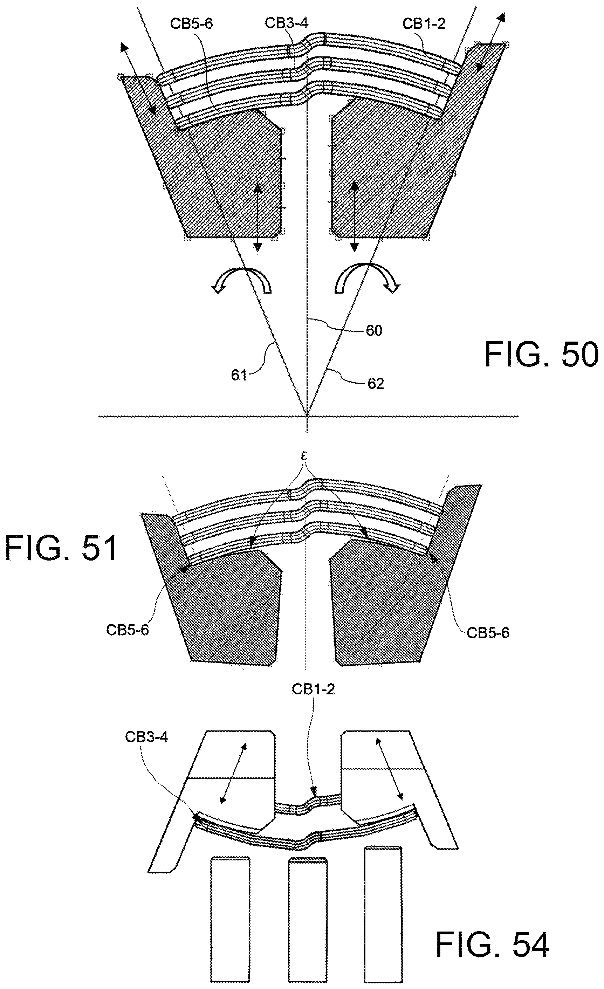

In fact, in order to position the countermolds at the basic conductor CB3-4, the first translation in the direction of the axis 60 is utilized, as shown in Fig. 50.

At this point, using the two pneumatic cylinders 555, it is possible to achieve the rotation indicated by the arrows, so as to correctly contain the basic conductor 3-4.

The same process is applied for inserting the basic conductors CB5-6.

It can be noted that, unlike the case in which the countermolds move in the radial direction 61, 62, in this alternative embodiment instead, a small error, $\varepsilon$, in terms of containment of the basic conductor, can be contemplated.

In this embodiment, it is convenient to model the countermolds referring to the innermost basic conductor (the one belonging to layers n and n-1), but positioning them correctly for the outermost basic conductor (the one relating to layers 1-2), so as to always have good containment of all the basic conductors at the legs.

By first making a linear movement along the central axis 60 and then a rotation, it is obtained that the basic conductor belonging to the innermost layers (in this case 5-6) is thus contained, see Fig. 51.

A further solution can consist in mounting one of the two inserter bodies on a carriage (not shown), actuated by a two-position pneumatic cylinder.

A further aspect to be evaluated in this case is as follows: every time the crown is changed, the bodies of the loading and insertion device are repositioned (through two movements as seen above). This is also the case for the two lower rods of the chute, being integral with the baseplate: any system of abutments - springs must therefore be "modular" according to the crown that is being formed and/or the type of basic conductors (standard or nested) that are being processed.

### Presence of auxiliary nib for the hairpin transfer system

In the second alternative embodiment (Fig. 52) for the transfer and handling of basic conductors, the presence of the nib 535 allows the basic conductors (especially those belonging to the innermost layers) not to fall and thus to be supported in the last segment, before ending up on the countermold 520.

For example, the nib can be actuated following two different logics:

- by means of a two-position pneumatic cylinder 555: once the basic conductor arrives, it advances by means of the lateral feeding and positioning rollers 540 and is supported in this segment by the nib 535, which moves back once the rollers have finished their stroke, as shown in Fig. 52. The nib moves back, by virtue of a cylinder (or retraction means, not shown in the figures), and the basic conductor can fall freely and/or with the aid of the thrusting blades 510;
- The nib 535 can perform a 90° rotation downwards (as previously described and shown in Fig. 18 with the handling mechanism 545) so as to return into a suitable seat 535S and not interfere with other elements.

A third alternative solution for managing the transfer and handling system for basic conductors is shown in Figs. 53-55. Such a solution provides that:

- the upper guide or rod 530a of the transfer rod is integral with the baseplate 550, which has freedom of movement only along the axis 70;
- the lower guides or rods 530b and 530c are integral with the two electric axes which move the first and second countermold bodies 521 and 522 of the inserter, respectively. It is thus possible to omit the presence of the ball joints, while ensuring in any case a good guide both of the basic conductors belonging to different crowns, and of any nested basic conductors.

Fig. 54 shows the radial displacements of the two countermolds to handle the basic conductor CB1-2 of layer 1-2, and the basic conductor CB3-4 of layer 3-4.

An advantage of this solution is that it does not have the leg containment error $\varepsilon$ previously highlighted.

It is noted that the nested basic conductors 255A are equally processable, since the two lower rods are integral with the electric axes which move the bodies of the loading and insertion device.

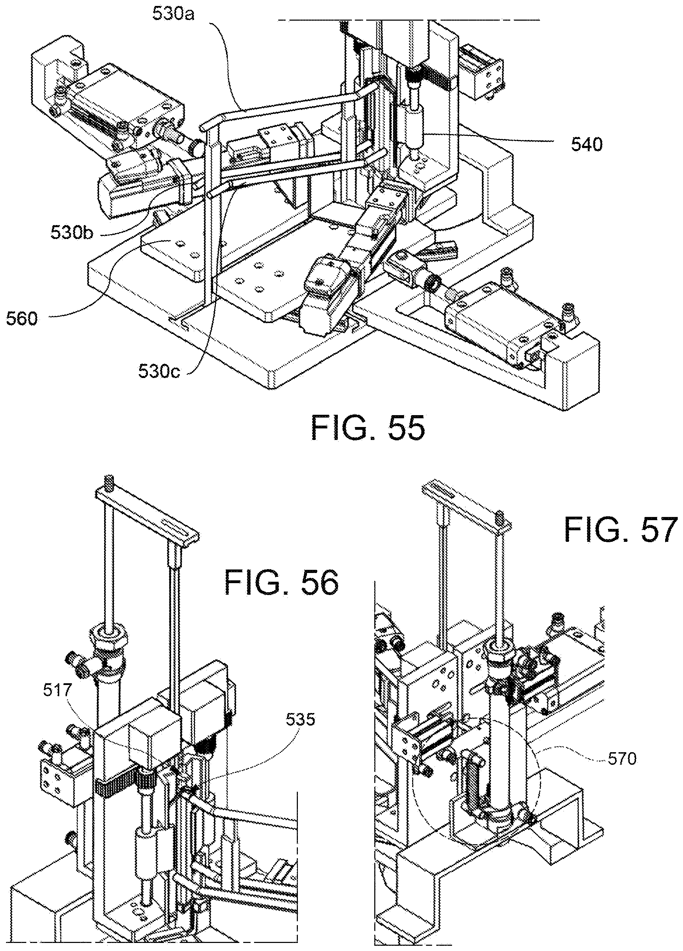

As far as the upper rod is concerned, however, it remains integral with the lower plate; while the nib 535 can be present as shown in Fig. 55.

### Movement of the rods

The movement of the two lower guides 530b and 530c of the basic conductor transfer system 530 can be performed for example through the two electric axes.

By positioning the two lower guides 530b and 530c of the transfer system integral with the two electric axes which move the two bodies of the loading and insertion device, it is possible to obtain the desired motion, i.e., a translation along the axes 61, 62.

In order to process basic conductors with different opening angles on the same crown (for example nested basic conductors 255A), it is possible to introduce a specific movement of the two lower guides 530b and 530c of the transfer system 530 of the basic conductors.

For simplicity purposes, the discussion for one of the two lower rods is provided below.

In the condition in which the standard basic conductors are processed, the lower rods or guides can be fed through two electro-cylinders as above, so as to place themselves at the layers associated with the basic conductors in hand.

**Blade**

The blade system can be made with an alternative geometry and configuration with respect to those above, as shown in Figs. 56 and 57. The alternative blade system comprises:

-    a nib 535 for supporting the basic conductors, as discussed above;
-    an upper thruster 517 (similar to the version 510 of the blade) which ensures the insertion of the basic conductor, by thrusting, if the conductor does not fall naturally, at the upper ridge thereof.

In this configuration, the nib is synchronized with the mechanism which allows the upper thruster to advance vertically.

As the thruster allows the insertion of the basic conductor, the nib moves, without hindering the insertion thereof. In fact, the thruster replaces the blade in the other embodiments. In general, the thruster can be included in the term "blade".

**Advantages of the invention**

The loading and insertion device 500 of the basic conductors and the related removable insertion and handling device 400 have several advantages with respect to the technologies and methods of the prior art.

First, the system according to the invention allows different types of basic conductors to be processed on a single apparatus, for example standard, reverse, nested basic conductors, in a sequential and automatic manner without having to resort to the intervention of an external operator. The system is also compact due to the configuration thereof, thus reducing the size of prior-art systems.

The cycle times for the assembly of the stator windings are thus reduced, while increasing the efficiency of the system and reducing the production costs with respect to the prior art. The times are reduced both due to the flexibility of the system which adapts to the various windings, and because the same flexibility is implemented quickly by virtue of the structure itself of the means according to the invention.

Another advantage of the system according to the invention is the high accuracy in handling and inserting the basic conductors. In fact, the basic conductors are guided and thrusted into the winding without undergoing deformations or variations from their initial shape when entering in the system. This ensures the provision of stator windings with a high level of precision, limiting as much as possible the imperfections and rubbing between the basic conductors, which often cause electrical faults.

LIST OF REFERENCE SIGNS

Electric axes, radial direction

CB1-2 - basic conductor layer 1-2
CB3-4 - basic conductor layer 3-4
CB5-6 - basic conductor layer 5-6
CR2-3 - reverse basic conductor layer 2-3
CB4-5 - reverse basic conductor layer 4-5

T - tangency

50 - winding axis
60 - central countermold movement axis
61 - oblique countermold movement axis
62 - oblique countermold movement axis
70 - inserter axis
100 - winding
100-CI - internal crown
100-CIN - intermediate crown
SLR - space for accommodating the reverse basic conductor in the winding
255 - standard basic conductor
$255_1$ - standard basic conductor inserted

255A - nested basic conductor

255R - reverse basic conductor

255RT - bridge-like portion of the reverse basic conductor

255z - strip

255x - extended sides of the strip

255y - connecting edges or spokes of the strip

255-IVP - inversion hairpin

255-IP - I-pins

300 - circumferential containment of the basic conductors

350 - circumferential containment slots

400 - insertion and handling device or "means"

400' - insertion and handling device or "means" for nested basic conductors

401 - first (independent) insertion and handling device

402 - second (independent) insertion and handling device

410 - wedge-shaped (circumferential) guide and containment end

420 - circumferential containment end

430 - wedge-shaped internal circumferential end or "bevel"

440U - single excavation portion

440S - standard basic conductor excavation portion

440R - reverse basic conductor excavation portion

460 - (upper) insertion end

465 - hole of (upper) insertion end

466 - stop element

470 - movable containment means

480 - shaped bridge

500 -loading and insertion system for basic conductors or "inserter"

500I - theoretical initial position

500F -end volume of a basic conductor before vertical sliding

500R - containment volume

510 - blade

511 - first blade body

512 - second blade body

517 - upper thruster (similar to version 510 of the blade)

520 - countermold

520I1 - first countermold sidewall

520I2 - second countermold sidewall

521 - first countermold body

522 - second countermold body

530 - basic conductor transfer system or "chute" (in general, "loading means")

530a - upper guide

530b - lower guide

530c - lower guide

534 - ball joint

535 - nib

540 - lateral feeding and positioning roller (in general, "loading means")

541 - roller fin

542 - roller vents

545 - wheel

550 - baseplate

551 - electric axes

555 - pneumatic cylinder

556 - curved guides

560 - movement plates

600 - different circumferential containment of the basic conductors

610 - retractable radial elements

SLR - reverse hairpin destination area

PFR -final position of the reverse hairpin

SE - Outermost layer

SI - Innermost layer
F1, F2 - step of feeding the basic conductor
F3 - step of positioning the basic conductor
F4 - blade descent step
F5 - step of idly rotating the lateral rollers
F6 - blade ascent step
PNC - Uncontained part of a reverse hairpin

Preferred embodiments were described above and some variants of the present invention were suggested, but it is understood that those skilled in the art may make modifications and changes without departing from the related scope of protection, as defined by the appended claims.

**Claims**

1. A device (500,400) for loading and inserting basic conductors (255, 255-R, 255-IP, 255-IVP) configured to load, handle and insert the basic conductors in circumferential containment means (300, 600), said loading and inserting device (500,400) comprises a loader or device for loading and handling (500) and a removable insertion and handling device (400), each basic conductor comprising a head end and one or more legs with a respective free insertion end, the loading and inserting device (500,400) being configured to assemble a stator or rotor winding (100) consisting of one or more sectors (100-CI) which extend circumferentially about a winding axis (50), each sector comprising one or more layers, each layer consisting of a circumferential arrangement of basic conductors, the loading and handling device (500) comprising:

   - a first (521) countermold body and a second (522) countermold body configured to define a containment volume (500R) of basic conductors, said first and second countermold bodies (521,522) each having an extension along an axial direction which in use is parallel to said winding axis (50);
   - loading means (530, 540) of the basic conductors in said containment volume;

   wherein said containment volume (500R) comprises an end volume (500F) of a basic conductor against said first and second countermold bodies (521,522), the end volume (500F) being configured to cause the basic conductor to slide along said axial direction (z) up to insertion into the circumferential containment means (300, 600) within a sector being assembled (100-CIN) of said one or more sectors (100-CI); wherein at one end of the first and second countermold bodies in said axial direction, on the side intended to be, in use, facing said circumferential containment means (300,600), integrally with said first and second countermold bodies (521,522), a removable insertion and handling device (400) is provided with a corresponding first insertion and handling device (401) and a corresponding second insertion and handling device (402) for inserting and handling the basic conductors in said circumferential containment, wherein the first insertion and handling device (401) comprises a first through hole (440U) for a portion of basic conductor configured to accommodate and guide the basic conductor (255, 255R) until it is inserted in an axial direction parallel to said winding axis (50) into said circumferential containment means (300, 600) in an insertion region of the circumferential containment means, as well as a first wedge-shaped guide and containment end (410) which narrows in a direction transverse to said axial direction, the first wedge-shaped guide and containment end (410) being placed at a predetermined distance from the winding axis (50) and being configured to:

   - radially displace, in use, upon a relative rotation of said circumferential containment means (300,600) with respect to said removable insertion and handling device (400), one or more layers ($255_1$) of said sector being assembled (100-CIN) as a function of their circumferential position in said sector being assembled (100-CIN) and so that in said insertion region there is a free space between the basic conductors of the sector being assembled (100-CIN) for an insertion of a last basic conductor of the sector; and
   - guide and contain the already inserted basic conductors of the sector fed towards the first insertion and handling device (401) upon said relative rotation.

2. A device according to claim 1, wherein one or more thrusting blades (510, 511, 512, 515, 517) of the basic conductors are included, configured to slide in said axial direction and thrust the basic conductor into said end volume (500F) along the axial direction up to substantially outside the first and second countermold bodies.

3. A device according to claim 1 or 2, wherein the second insertion and handling device (402) comprises a second through hole (440R, 440S) for a portion of basic conductor, as well as a second guide and containment end (420), circumferentially opposite to said first wedge-shaped guide and containment end (410), said second guide and containment end (420) being configured to contain the basic conductors already inserted into a sector being assembled (100-CIN) of said one or more sectors (100-CI).

4. A device according to claim 2 or 3, wherein said first wedge-shaped guide and containment end (410) is configured so that, in use, the basic conductors gradually inserted into the sector being assembled (100-CIN) follow a helical-type profile about the winding axis (50), so as to radially move outwards the first basic conductors inserted into the sector.

5. A device according to one of claims 1 to 4, wherein the first (401) and/or second (402) insertion and handling device comprises a stop element (466A,466B,466) for said head end.

6. A device according to one of claims 1 to 5, wherein said first (401) and/or second (402) insertion and handling devices are mutually fixed.

7. A device according to claim 6, wherein said first (401) and/or second (402) insertion and handling devices are formed in a single piece (400,400').

8. A device according to one of claims 1 to 5, wherein the first countermold body (521) is provided as a single countermold (520), the second countermold body (522) being provided as movable in a direction perpendicular to a direction perpendicular to the axial direction, and wherein said one or more thrusting blades (510) comprise a body with a geometry such as to enter between the first and second countermold bodies, said blade being simultaneously configured to thrust the basic conductors at a cusp of the head portion.

9. A device according to one of claims 1 to 5, wherein said first (521) and second countermold bodies (522) are configured to be rotated about said axial direction and moved with respect to each other independently, so as to modify said containment volume (500R).

10. A device according to claims 2 and 9, wherein said first and second countermold bodies are configured to be rotated about said axial direction and moved with respect to each other independently, so as to modify said containment volume, said one or more thrusting blades (510) each comprise first and second independent bodies (511,512) extending in the axial direction, each of the first and second independent bodies being configured to thrust said basic conductors at least on a head portion, the first and second independent bodies being integral with the first and second countermold bodies, respectively.

11. A device according to claim 9 or 10, wherein said first countermold body and said second countermold body are configured to be shifted, in use, each along a radial direction with respect to said winding axis.

12. A device according to claim 9 or 10, wherein said first countermold body (521) and said second countermold body (522) are configured to be counter-rotated, each about said axial direction.

13. A device according to one of claims 1 to 12, wherein the corresponding first insertion and handling device (401) for inserting and handling the basic conductors of the removable insertion and handling device (400) comprises one or more first elements (430) configured to produce, in use, upon relative rotation of said circumferential containment means (300, 600) with respect to said first insertion and handling device (401), a cam movement of said one or more basic conductors (255, 255R) inside the first insertion and handling device (401) in a radial direction towards a sector being assembled (100-CIN) until leaving said first insertion and handling device (401) and positioning in said sector being assembled (100-CIN).

14. A device according to claim 13, wherein the basic conductors are two-leg hairpins (255, 255-R, 255-IVP, 255-P), said first through hole (440U) and said second through hole (440R, 440S) being shaped so that a first leg inserted into said first through hole is frontal with respect to the relative rotation direction of said circumferential containment means (300, 600), and a second leg inserted into said second through hole is rearward with respect to said relative rotation direction, and wherein said one or more first elements comprise a tapered portion (430), on a plane perpendicular to said winding axis (50), in correspondence to said second leg, the tapered portion (430) widening in the relative rotation direction.

15. A device according to one or more of claims 1 to 14, wherein said first (401) and second (402) insertion and handling devices extend along said axial direction from an insertion end (460, 465) to an end opposite to the insertion end, and wherein:

- the insertion end (460, 465) comprises a guiding sleeve shaped so as to accommodate, laterally contain and guide said one or more basic conductors;
- the end opposite to the insertion end is dimensioned to contain said head end of the basic conductors and is open on the side facing, in use, said sector being assembled (100-CIN).

16. A device according to one or more of claims 1 to 15, wherein a subset of the basic conductors comprises one or more groups of nested basic conductors (255, 255A) each with a pitch between two legs, each group comprising a basic conductor with a higher pitch (255A) and one or more basic conductors with a gradually lower respective pitch (255), and wherein:

- additional movable containment means (470) are provided to contain the one or more basic conductors (255) with the gradually lower pitch,
- said additional movable containment means (470) are configured to be operated to position the one or more basic conductors with the gradually lower pitch and removed immediately before inserting the basic conductor with the higher pitch (255A).

17. A device according to claim 16, wherein the end opposite to the insertion end comprises a stop element (466) for the head of the basic conductor with lower pitch.

18. A device according one of claims 4 to 17, wherein the first insertion and handling device (401) comprises a through hole (440U) configured for the second leg of a standard or reverse basic conductor and the corresponding second insertion and handling device (402) comprises a first through hole (440S) for the first leg in the case of a standard basic conductor and a second through hole (440R) for the first leg in the case of a reverse hairpin.

19. A device according to claims 1 to 18, wherein said loading means (530, 540) comprise a transfer system (530) configured to slide the head end of the basic conductors from a loading station to said containment volume (500R).

20. A device according to claim 19, wherein said loading means comprise one or more lateral feeding and positioning rollers (540) arranged at the ends of said containment volume transversely to said axial direction rotatably about said axial direction and including fins (541) perpendicular to said axial direction so as to compact by thrusting, upon the rotation of the one or more lateral feeding and positioning rollers, each time the basic conductors into said containment volume against said first (521) and second (522) countermold bodies.

21. A device according to claim 20, wherein said first and second countermold bodies have lateral recesses configured to allow said fins (541) to continue the rotation after the thrusting of the basic conductors.

22. A device according to claim 20 or 21, wherein the one or more lateral feeding and positioning rollers (540) are the same on both sides of the countermold bodies and are arranged so that the straight line passing through respective centers of rotation is not perpendicular, in use, to a radial direction with respect to the winding axis (50) but has an inclination $\alpha$ proportional to a bend of the head portion of a basic conductor.

23. A device according to one of claims 20 to 22, wherein the basic conductors have a quadrangular strip-shaped section (255z), with two longer sides (255x) and two shorter sides (255y), and wherein the one or more lateral feeding and positioning rollers (540) are arranged so that, in one position of the one or more lateral feeding and positioning rollers corresponding to the position of the basic conductor in said end volume (500F), the fins (541) are in contact along an entire longer side (255x).

24. A device according to one of claims 20 to 23, wherein the basic conductors have a quadrangular strip-shaped section (255z), with two longer sides (255x) and two shorter sides (255y), and wherein the one or more lateral feeding and positioning rollers (540) are arranged so that, in one position of the one or more lateral feeding and positioning rollers corresponding to the position of the basic conductor in said end volume (500F), the fins (541) are in contact along an entire shorter side (255y).

25. A device according to one of claims 20 to 24, wherein the one or more lateral feeding and positioning rollers (540) are arranged to rotate, in use, over an angle of less than 180°, wherein the blade (510) is shaped to thrust only on about 2/3 of the surface area of the head portion of the basic conductor, so that the motion of the blade and rollers is

EP 4 540 915 B1

simultaneous.

26. A device according to one of claims 20 to 25, wherein said transfer system (530) comprises a first upper guide (530a,535) configured to support the head ends of the basic conductors, as well as two lower guides (530b,530c) configured to slide inside the legs of the basic conductor being fed.

27. A device according to claim 26, wherein the upper guide ends contiguously to a removable support (535) for the head ends of the basic conductors, which is retractable so as to cause the basic conductors to slide along said axial direction.

28. A device according to claim 26 or 27, wherein the upper guide (530a) is fixed, wherein the two lower guides (530b, 530c) are configured to be moved away from or towards each other by translation means (534) of the lower guides, in order to load and move nested basic conductors.

**Patentansprüche**

1. Vorrichtung (500,400) zum Laden und Stecken von Basisleitern (255, 255-R, 255-IP, 255-IVP), die dazu konfiguriert ist, die Basisleiter in Umfangsaufnahmemittel (300, 600) zu laden, zu handhaben und zu stecken, wobei eine Lade und Steckvorrichtung (500,400), ein Ladegerät- oder eine Vorrichtung zum Laden und Handhaben (500) und eine abnehmbare Steck- und Handhabungsvorrichtung (400) umfasst,

jeder Basisleiter umfassend
ein Kopfende und einen oder mehrere Schenkel mit einem jeweiligen freien Steckende, wobei die Lade- und Steckvorrichtung (500,400) dazu konfiguriert ist, eine Stator- oder Rotorwicklung (100), bestehend aus einem oder mehreren Ausschnitten (100-CI), die sich umlaufend um eine Wicklungsachse (SO) erstrecken, zusammenzusetzen, wobei jeder Ausschnitt eine oder mehrere Schichten umfasst, wobei jede Schicht aus einer umlaufenden Anordnung von Basisleitern besteht, die Lade- und Handhabungsvorrichtung (500) umfassend:

- einen ersten Gegenformkörper (521) und einen zweiten Gegenformkörper (522), die dazu konfiguriert sind, ein Aufnahmevolumen (500R) für Basisleiter zu definieren, wobei der erste und der zweite Gegenformkörper (521, 522) jeweils eine Erstreckung entlang einer axialen Richtung aufweisen, die im Gebrauch parallel zu der Wicklungsachse (50) ist;
- Lademittel (530, 540) der Basisleiter in das Aufnahmevolumen;

wobei das Aufnahmevolumen (500R) ein Endvolumen (500F) eines Basisleiters gegen den ersten und den zweiten Gegenformkörper (521,522) umfasst, wobei das Endvolumen (500F) dazu konfiguriert ist, den Basisleiter entlang der axialen Richtung (z) bis zu dem Stecken in die umlaufenden Aufnahmemittel (300, 600) innerhalb eines zusammenzusetzenden Ausschnitts (100-CIN) der einen oder mehreren Ausschnitte (100-CI) gleiten zu lassen; wobei an einem Ende des ersten und des zweiten Gegenformkörpers in der axialen Richtung auf der Seite, die dazu bestimmt ist, im Gebrauch den umlaufenden Aufnahmemitteln (300,600) zugewandt zu sein, vollständig mit dem ersten dem und zweiten Gegenformkörper (521,522) eine abnehmbare Steck- und Handhabungsvorrichtung (400) mit einer entsprechenden ersten Steck- und Handhabungsvorrichtung (401) und einer entsprechenden zweiten Steck- und Handhabungsvorrichtung (402) zum Stecken und Handhaben der Basisleiter in die umlaufende Aufnahme, versehen ist, wobei die erste Steck- und Handhabungsvorrichtung (401) eine erste Durchgangsbohrung (440U) für einen Abschnitt eines Basisleiters umfasst, der dazu konfiguriert ist, den Basisleiter (255, 2555R) aufzunehmen und zu führen, bis er in einer axialen Richtung, die parallel zu der Wicklungsachse (50) ist, in die umlaufenden Aufnahmemittel (300, 600) in einem Steckbereich der umlaufenden Aufnahmemittel gesteckt wird, sowie ein erstes keilförmiges Führungs- und Aufnahmeende (410), das sich in einer Richtung quer zu der axialen Richtung verjüngt, wobei das erste keilförmige Führungs- und Aufnahmeende (410) in einem vorbestimmten Abstand von der Wicklungsachse (50) angeordnet ist und dazu konfiguriert ist, um:

- im Gebrauch, bei einer relativen Drehung der umlaufenden Aufnahmemittel (300, 600) in Bezug auf die abnehmbare Steck- und Handhabungsvorrichtung (400), eine oder mehrere Schichten ($255_1$) des zusammenzusetzenden Ausschnitts (100-CIN) in Abhängigkeit von deren umlaufenden Stellung in dem zusammenzusetzenden Ausschnitt (100-CIN) radial zu verschieben

und sodass in dem Steckbereich ein Freiraum zwischen den Basisleitern des zusammenzusetzenden Ausschnitts (100-CIN) zum Stecken eines mindestens letzten Basisleiters des Ausschnitts vorhanden ist; und

- die bereits gesteckten Basisleiter des Ausschnitts zu führen und aufzunehmen, die bei der relativen Drehung zu der ersten Steck- und Handhabungsvorrichtung (401) vorgeschoben werden.

2. Vorrichtung nach Anspruch 1, wobei eine oder mehrere Schubklingen (510, 511,512,515,517) der Basisleiter enthalten sind, die dazu konfiguriert sind, in der axialen Richtung zu gleiten und die Basisleiter in das Endvolumen (500F) entlang der axialen Richtung bis im Wesentlichen außerhalb des ersten und des zweiten Gegenformkörpers zu schieben.

3. Vorrichtung nach Anspruch 1 oder 2, wobei die zweite Steck- und Handhabungsvorrichtung (402) eine zweite Durchgangsbohrung (440R,440S) für einen Abschnitt eines Basisleiters sowie ein zweites Führungs- und Aufnahmeende (420) umfasst, das umlaufend dem ersten keilförmigen Führungs- und Aufnahmeende (410) gegenüberliegt, wobei das zweite Führungs- und Aufnahmeende (420) dazu konfiguriert ist, die bereits gesteckten Basisleiter in einem zusammenzusetzenden Ausschnitt (100-CIN) der einen oder mehreren Ausschnitte (100-CI) aufzunehmen.

4. Vorrichtung nach Anspruch 2 oder 3, wobei das erste keilförmige Führungs- und Aufnahmeende (410) dazu konfiguriert ist, sodass, im Gebrauch, die Basisleiter, die schrittweise in den zusammenzusetzenden Ausschnitt (100-CIN) gesteckt werden, einem spiralförmigen Profil um die Wicklungsachse (50) folgen, um die ersten Basisleiter, die in den Ausschnitt gesteckt werden, radial nach außen zu bewegen.

5. Vorrichtung nach einem der Ansprüche 1 bis 4, wobei die erste (401) und/oder zweite (402) Steck- und Handhabungsvorrichtung ein Halteelement (466A,466B,466) für das Kopfende umfasst.

6. Vorrichtung nach einem der Ansprüche 1 bis 5, wobei die erste (401) und/oder die zweite (402) Steck- und Handhabungsvorrichtung miteinander fest verbunden sind.

7. Vorrichtung nach Anspruch 6, wobei die erste (401) und/oder die zweite (402) Steck- und Handhabungsvorrichtung einstückig (400,400') ausgebildet sind.

8. Vorrichtung nach einem der Ansprüche 1 bis 5, wobei der erste Gegenformkörper (521) als eine einzelne Gegenform (520) vorgesehen ist, der zweite Gegenformkörper (522) beweglich in einer Richtung senkrecht zu einer Richtung senkrecht zu der axialen Richtung vorgesehen ist, und wobei die eine oder mehreren Schubklingen (510) einen Körper mit einer Geometrie umfassen, um zwischen den ersten und zweiten Gegenformkörper einzutreten, wobei die Klinge gleichzeitig dazu konfiguriert ist, die Basisleiter an einer Spitze des Kopfabschnitts zu schieben.

9. Vorrichtung nach einem der Ansprüche 1 bis 5, wobei der erste (521) und der zweite Gegenformkörper (522) dazu konfiguriert sind, um die axiale Richtung gedreht zu werden und unabhängig in Bezug zueinander bewegt zu werden, um das Aufnahmevolumen (500R) zu ändern.

10. Vorrichtung nach den Ansprüchen 2 und 9, wobei der erste und der zweite Gegenformkörper dazu konfiguriert sind, um die axiale Richtung gedreht zu werden und unabhängig in Bezug zueinander bewegt zu werden, um das Aufnahmevolumen zu ändern, wobei die eine oder mehreren Schubklingen (510) jeweils erste und zweite unabhängige Körper (511,512) umfassen, die sich in der axialen Richtung erstrecken, wobei jeder der ersten und der zweiten unabhängigen Körper dazu konfiguriert ist, die Basisleiter mindestens an einem Kopfabschnitt zu schieben, wobei der erste und der zweite unabhängige Körper jeweils einstückig mit dem ersten und dem zweiten Gegenformkörper ausgebildet sind.

11. Vorrichtung nach Anspruch 9 oder 10, wobei der erste Gegenformkörper und der zweite Gegenformkörper dazu konfiguriert sind, im Gebrauch, entlang einer radialen Richtung in Bezug auf die Wicklungsachse verschoben zu werden.

12. Vorrichtung nach Anspruch 9 oder 10, wobei der erste Gegenformkörper (521) und der zweite Gegenformkörper (522) dazu konfiguriert sind, jeweils gegenläufig um die axiale Richtung gedreht zu werden.

13. Vorrichtung nach einem der Ansprüche 1 bis 12, wobei die entsprechende erste Steck- und Handhabungsvorrichtung (401) zum Stecken und Handhaben der Basisleiter der abnehmbaren Steck- und Handhabungsvorrichtung (400) ein oder mehrere erste Elemente (430) umfasst, die dazu konfiguriert sind, im Gebrauch, bei einer relativen Drehung der umlaufenden Aufnahmemittel (300,600) in Bezug auf die erste Steck- und Handhabungsvorrichtung (401) eine Nockenbewegung der einen oder mehreren Basisleiter (255, 255R) innerhalb der ersten Steck- und Handhabungsvorrichtung (401) in einer radialen Richtung zu einem zusammenzusetzenden Ausschnitt (100-CIN) zu erzeugen, bis zum Verlassen der ersten Steck- und Handhabungsvorrichtung (401) und Positionieren in dem zusammenzusetzenden Ausschnitt (100-CIN).

14. Vorrichtung nach Anspruch 13, wobei die Basisleiter Zweischenkel-Klammern (255, 255-R, 255-IVP, 255-P) sind, wobei die erste Durchgangsbohrung (440U) und die zweite Durchgangsbohrung (440R, 440S) ausgebildet sind, sodass sich ein erster Schenkel, der in die erste Durchgangsbohrung eingesetzt wird, in Bezug auf die relative Drehrichtung der umlaufenden Aufnahmemittel (300, 600) stirnwärts befindet und sich ein zweiter Schenkel, der in die zweite Durchgangsbohrung eingesetzt wird, in Bezug auf die relative Drehrichtung rückwärts befindet, und wobei das eine oder die mehreren ersten Elemente einen verjüngten Abschnitt (430) auf einer Ebene senkrecht zu der Wicklungsachse (50) an dem zweiten Schenkel umfassen, wobei sich der verjüngte Abschnitt (430) in der relativen Drehrichtung erweitert.

15. Vorrichtung nach einem der Ansprüche 1 bis 14, wobei sich die erste (401) und die zweite (402) Steck- und Handhabungsvorrichtung entlang der axialen Richtung von einem Steckende (460,465) zu einem Ende, das dem Steckende gegenüberliegt, erstrecken, und wobei:

   - das Steckende (460, 465) eine Führungshülse umfasst, die ausgebildet ist, um einen oder mehreren Basisleiter aufzunehmen und zu führen;
   - das Ende, das dem Steckende gegenüberliegt, bemessen wird, um das Kopfende der Basisleiter aufzunehmen, und auf der Seite, die, im Gebrauch, dem zusammenzusetzenden Ausschnitt (100-CIN) zugewandt ist, offen ist.

16. Vorrichtung nach einem der Ansprüche 1 bis 15, wobei eine Untergruppe der Basisleiter eine oder mehrere Gruppen von verschachtelten Basisleitern (255, 255A) umfasst, jeweils mit einem Abstand zwischen zwei Schenkeln, wobei jede Gruppe einen Basisleiter mit einem größeren Abstand (255A) und einen oder mehrere Basisleiter mit einem schrittweise geringeren Abstand (255) umfasst, und wobei:

   - zusätzliche bewegliche Aufnahmemittel (470) vorgesehen sind, um die einen oder mehreren Basisleiter (255) mit einem schrittweise geringeren Abstand aufzunehmen,
   - die zusätzlichen beweglichen Aufnahmemittel (470) dazu konfiguriert sind, betätigt zu werden, um die einen oder mehreren Basisleiter mit dem schrittweise geringeren Abstand zu positionieren, und sie unmittelbar vor dem Stecken des Basisleiters mit dem größeren Abstand (255A) entfernt zu werden.

17. Vorrichtung nach Anspruch 16, wobei das Ende, das dem Steckende gegenüberliegt, ein Halteelement (466) für den Kopf des Basisleiters mit geringerem Abstand umfasst.

18. Vorrichtung nach einem der Ansprüche 4 bis 17, wobei die erste Steck- und Handhabungsvorrichtung (401) eine Durchgangsbohrung (440U) umfasst, die für den zweiten Schenkel eines standardgemäßen oder umgekehrten Basisleiters konfiguriert ist, und die entsprechende zweite Steck- und Handhabungsvorrichtung (402) eine erste Durchgangsbohrung (440S) für den ersten Schenkel im Falle eines standardgemäßen Basisleiters und eine zweite Durchgangsbohrung (440R) für den ersten Schenkel im Falle einer umgekehrten Klammer umfasst.

19. Vorrichtung nach den Ansprüchen 1 bis 18, wobei die Lademittel (530, 540) ein Übertragungssystem (530) umfassen, das dazu konfiguriert ist, das Kopfende der Basisleiter von einer Ladestation zu dem Aufnahmevolumen (SOOR) zu verschieben.

20. Vorrichtung nach Anspruch 19, wobei die Lademittel einen oder mehrere seitliche Vorschub- und Positionierrollen (540) umfassen, die an den Enden des Aufnahmevolumens quer zu der axialen Richtung drehbar um die axiale Richtung angeordnet sind und umfassend Rippen (541), die senkrecht zu der axialen Richtung sind, um durch Schieben bei der Drehung der einen oder mehreren seitlichen Vorschub- und Positionierrollen jedesmal die Basisleiter in das Aufnahmevolumen gegen den ersten (521) und den zweiten (522) Gegenformkörper zu drücken.

21. Vorrichtung nach Anspruch 20, wobei der erste und der zweite Gegenformkörper seitliche Ausnehmungen aufweisen, die dazu konfiguriert sind, den Rippen (541) zu ermöglichen, die Drehung nach dem Schieben der Basisleiter fortzusetzen.

22. Vorrichtung nach Anspruch 20 oder 21, wobei der eine oder die mehreren seitlichen Vorschub- und Positionierrollen (540) auf beiden Seiten der Gegenformkörper gleich sind und angeordnet sind, sodass die Gerade, die durch die jeweiligen Drehzentren durchgeht, im Gebrauch, nicht senkrecht zu einer radialen Richtung in Bezug auf die Wicklungsachse (SO) ist, sondern eine Neigung α aufweist, die zu einer Biegung des Kopfabschnitts eines Basisleiters passend ist.

23. Vorrichtung nach einem der Ansprüche 20 bis 22, wobei die Basisleiter einen vierkantigen bandförmigen Schnitt (255z) mit zwei längeren Seiten (255x) und zwei kürzeren Seiten (255y) aufweisen, und wobei der eine oder die mehreren seitlichen Vorschub- und Positionierrollen (540) angeordnet sind, sodass in einer Stellung, die der Stellung des Basisleiters in dem Endvolumen (500F) entspricht, des einen oder der mehreren seitlichen Vorschub- und Positionierrollen, die Rippen (541) entlang einer gesamten längeren Seite (255x) in Kontakt stehen.

24. Vorrichtung nach einem der Ansprüche 20 bis 23, wobei die Basisleiter einen vierkantigen bandförmigen Schnitt (255z) mit zwei längeren Seiten (255x) und zwei kürzeren Seiten (255y) aufweisen, und wobei der eine oder die mehreren seitlichen Vorschub- und Positionierrollen (540) angeordnet sind, sodass in einer Stellung, die der Stellung des Basisleiters in dem Endvolumen (500F) entspricht, des einen oder der mehreren seitlichen Vorschub- und Positionierrollen, die Rippen (541) entlang einer gesamten kürzeren Seite (255y) in Kontakt stehen.

25. Vorrichtung nach einem der Ansprüche 20 bis 24, wobei der eine oder die mehreren seitlichen Vorschub- und Positionierrollen (540) angeordnet sind, um, im Gebrauch, über einen Winkel von weniger als 180° zu drehen, wobei die Schubklinge (510) ausgebildet ist, um nur auf etwa 2/3 des Oberflächenbereichs des Kopfabschnitts des Basisleiters zu schieben, so dass die Bewegung der Klinge und der Rollen gleichzeitig erfolgt.

26. Vorrichtung nach einem der Ansprüche 20 bis 25, wobei das Übertragungssystem (530) eine erste obere Führung (530a,535) umfasst, die dazu konfiguriert ist, die Kopfenden der Basisleiter zu stützen, sowie zwei untere Führungen (530b,530c), die dazu konfiguriert sind, innerhalb der Schenkel des vorzuschiebenden Basisleiters zu gleiten.

27. Vorrichtung nach Anspruch 26, wobei die obere Führung angrenzend an eine abnehmbare Stütze (535) für die Kopfenden der Basisleiter endet, die zurückziehbar ist, um die Basisleiter entlang der axialen Richtung gleiten zu lassen.

28. Vorrichtung nach Anspruch 26 oder 27, wobei die obere Führung (530a) fest ist, wobei die zwei unteren Führungen (530b, 530c) dazu konfiguriert sind, durch Verschiebungsmittel (534) weg voneinander oder zueinander bewegt zu werden, um verschachtelte Basisleiter zu laden und zu bewegen.

**Revendications**

1. Dispositif (500,400) pour charger et insérer des conducteurs de base (255, 255-R, 255-IP, 255-IVP) configuré pour charger, manipuler et insérer les conducteurs de base dans des moyens de confinement circonférentiel (300, 600) ledit dispositif de chargement et d'insertion (500,400) comprenant un chargeur ou dispositif pour charger et manipuler (500) et un dispositif amovible d'insertion et de manipulation (400),

   chaque conducteur de base comprenant
   une extrémité de tête et une ou plusieurs jambes avec une extrémité libre respective d'insertion, le dispositif de chargement et d'insertion (500,400) étant configuré pour assembler un enroulement de stator ou de rotor (100) constitué d'un ou de plusieurs secteurs (100-CI) qui s'étendent circonférentiellement autour d'un axe d'enroulement (50), chaque secteur comprenant une ou plusieurs couches, chaque couche étant constituée d'un agencement circonférentiel de conducteurs de base, le dispositif de chargement et de manipulation (500) comprenant :

   - un premier corps de contre-moule (521) et
   - un second corps de contre-moule (522) configuré pour définir un volume de confinement (500R) de conducteurs de base, ledit premier et second corps de contre-moule (521-522) présentant chacun une extension selon une direction axiale qui, en utilisation, est parallèle audit axe d'enroulement (50) ;
   - moyens de chargement (530, 540) des conducteurs de base dans ledit volume de confinement ;

   dans lequel ledit volume de confinement (500R) comprend un volume d'extrémité (500F) d'un conducteur de base contre lesdits premier et second corps de contre-moule (521,522), le volume d'extrémité (500F) étant configuré pour amener le conducteur de base à glisser selon ladite direction axiale (z) jusqu'à l'insertion dans les moyens de confinement circonférentiel (300, 600) à l'intérieur d'un secteur en cours d'assemblage (100-CIN) desdits un ou plusieurs secteurs (100-CI) ;

dans lequel, à une extrémité des premier et second corps de contre-moule selon ladite direction axiale, du côté destiné à être, en utilisation, en regard desdits moyens de confinement circonférentiel (300,600), intégralement avec lesdits premier et second corps de contre-moule (521,522), un dispositif amovible d'insertion et de manipulation (400) est prévu avec un premier dispositif correspondant d'insertion et de manipulation (401) et un second dispositif correspondant d'insertion et de manipulation (402) pour insérer et manipuler les conducteurs de base dans ledit confinement circonférentiel, dans lequel le premier dispositif d'insertion et de manipulation (401) comprend un premier trou traversant (440U) pour une portion de conducteur de base configuré pour loger et guider le conducteur de base (255, 255R) jusqu'à son insertion selon une direction axiale parallèle audit axe d'enroulement (50) dans lesdits moyens de confinement circonférentiel (300, 600) dans une région d'insertion des moyens de confinement circonférentiel, ainsi qu'une première extrémité en forme de coin de guidage et de confinement (410) qui se rétrécit selon une direction transversale à ladite direction axiale, la première extrémité en forme de coin de guidage et de confinement (410) étant placée à une distance prédéterminée de l'axe d'enroulement (50) et étant configurée pour :

déplacer radialement, en utilisation, lors d'une rotation relative desdits moyens de confinement circonférentiel (300,600) par rapport audit dispositif amovible d'insertion et de manipulation (400), une ou plusieurs couches ($255_1$) dudit secteur en cours d'assemblage (100-CIN) en fonction de leur position circonférentielle dans ledit secteur en cours d'assemblage (100-CIN)
et de sorte que, dans ladite région d'insertion, il existe un espace libre entre les conducteurs de base du secteur en cours d'assemblage (100-CIN) pour l'insertion d'un dernier conducteur de base du secteur ; et

- guider et contenir les conducteurs de base déjà insérés du secteur alimentés vers le premier dispositif d'insertion et de manipulation (401) lors de ladite rotation relative.

2. Dispositif selon la revendication 1, dans lequel une ou plusieurs lames de poussée (510, 511,512,515,517) des conducteurs de base sont incluses, configurées pour glisser selon ladite direction axiale et pousser le conducteur de base dans ledit volume d'extrémité (500F) le long de la direction axiale jusqu'à substantiellement à l'extérieur du premier corps de contre-moule et du second corps de contre-moule.

3. Dispositif selon la revendication 1 ou 2, dans lequel le second dispositif d'insertion et de manipulation (402) comprend un second trou traversant (440R,440S) pour une portion de conducteur de base, ainsi qu'une seconde extrémité de guidage et de confinement (420), circonférentiellement opposée à ladite première extrémité en forme de coin de guidage et de confinement (410), ladite seconde extrémité de guidage et de confinement (420) étant configurée pour contenir les conducteurs de base déjà insérés dans un secteur en cours d'assemblage (100-CIN) desdits un ou plusieurs secteurs (100-CI).

4. Dispositif selon la revendication 2 ou 3, dans lequel ladite première extrémité en forme de coin de guidage et de confinement (410) est configurée de sorte que, en utilisation, les conducteurs de base progressivement insérés dans le secteur en cours d'assemblage (100-CIN) suivent un profil de type hélicoïdal autour de l'axe d'enroulement (50), de manière à déplacer radialement vers l'extérieur les premiers conducteurs de base insérés dans le secteur.

5. Dispositif selon l'une quelconque des revendications 1 à 4, dans lequel le premier dispositif d'insertion et de manipulation (401) et/ou le second (402) dispositif d'insertion et de manipulation comprennent un élément d'arrêt (466A,466B,466) pour ladite extrémité de tête.

6. Dispositif selon l'une quelconque des revendications 1 à 5, dans lequel lesdits premier (401) et/ou second (402) dispositifs d'insertion et de manipulation sont fixés l'un à l'autre.

7. Dispositif selon la revendication 6, dans lequel lesdits premier (401) et/ou second (402) dispositifs d'insertion et de manipulation sont formés en une seule pièce (400,400').

8. Dispositif selon l'une quelconque des revendications 1 à 5, dans lequel le premier corps de contre-moule (521) est prévu en tant que contre-moule unique (520), le second corps de contre-moule (522) étant prévu comme mobile selon une direction perpendiculaire à une direction perpendiculaire à la direction axiale, et dans lequel ladite une ou plusieurs lames de poussée (510) comprennent un corps avec une géométrie telle qu'il pénètre entre les premier et second corps de contre-moule, ladite lame étant simultanément configurée pour pousser les conducteurs de base au niveau d'une cuspide de la portion de tête.

9. Dispositif selon l'une quelconque des revendications 1 à 5, dans lequel lesdits premier (521) et second corps de contre-moule (522) sont configurés pour être tournés autour de ladite direction axiale et déplacés l'un par rapport à l'autre indépendamment, de manière à modifier ledit volume de confinement (50OR).

10. Dispositif selon les revendications 2 et 9, dans lequel lesdits premier et second corps de contre-moule sont configurés pour être tournés autour de ladite direction axiale et déplacés l'un par rapport à l'autre indépendamment, de manière à modifier ledit volume de confinement, ladite une ou plusieurs lames de poussée (510) comprenant chacune des premier et second corps indépendants (511,512) s'étendant selon la direction axiale, chacun des premier et second corps indépendants étant configuré pour pousser lesdits conducteurs de base au moins sur une portion de tête, les premier et second corps indépendants étant intégralement formés avec les premier et second corps de contre-moule, respectivement.

11. Dispositif selon la revendication 9 ou 10, dans lequel lesdits premier corps de contre-moule et second corps de contre-moule sont configurés pour être déplacés, en utilisation, chacun selon une direction radiale par rapport audit axe d'enroulement.

12. Dispositif selon la revendication 9 ou 10, dans lequel lesdits premier corps de contre-moule (521) et second corps de contre-moule (522) sont configurés pour être contre-rotatifs, chacun autour de ladite direction axiale.

13. Dispositif selon l'une quelconque des revendications 1 à 12, dans lequel le premier dispositif correspondant d'insertion et de manipulation (401) pour insérer et manipuler les conducteurs de base du dispositif amovible d'insertion et de manipulation (400) comprend un ou plusieurs premiers éléments (430) configurés pour produire, en utilisation, lors d'une rotation relative desdits moyens de confinement circonférentiel (300,600) par rapport audit premier dispositif d'insertion et de manipulation (401), un mouvement à came desdits un ou plusieurs conducteurs de base (255, 255R) à l'intérieur du premier dispositif d'insertion et de manipulation (401) selon une direction radiale vers un secteur en cours d'assemblage (100-CIN) jusqu'à quitter ledit premier dispositif d'insertion et de manipulation (401) et se positionner dans ledit secteur en cours d'assemblage (100-CIN).

14. Dispositif selon la revendication 13, dans lequel les conducteurs de base sont des épingles à cheveux à deux jambes (255, 255-R, 255-IVP, 255-P), ledit premier trou traversant (440U) et ledit second trou traversant (440R, 440S) étant façonnés de sorte qu'une première jambe insérée dans ledit premier trou traversant est frontale par rapport à la direction de rotation relative desdits moyens de confinement circonférentiel (300, 600), et qu'une seconde jambe insérée dans ledit second trou traversant est arrière par rapport à ladite direction de rotation relative, et dans lequel lesdits un ou plusieurs premiers éléments comprennent une portion effilée (430), sur un plan perpendiculaire audit axe d'enroulement (50), en correspondance avec ladite seconde jambe, la portion effilée (430) s'élargissant dans la direction de rotation relative.

15. Dispositif selon l'une quelconque des revendications 1 à 14, dans lequel lesdits premier (401) et second (402) dispositifs d'insertion et de manipulation s'étendent selon ladite direction axiale d'une extrémité d'insertion (460,465) à une extrémité opposée à l'extrémité d'insertion, et dans lequel :

l'extrémité d'insertion (460, 465) comprend un manchon de guidage façonné pour loger, contenir latéralement et guider lesdits un ou plusieurs conducteurs de base ;
l'extrémité opposée à l'extrémité d'insertion est dimensionnée pour contenir ladite extrémité de tête des conducteurs de base et est ouverte du côté faisant face, en utilisation, audit secteur en cours d'assemblage (100-CIN).

16. Dispositif selon l'une quelconque des revendications 1 à 15, dans lequel un sous-ensemble des conducteurs de base comprend un ou plusieurs groupes de conducteurs de base imbriqués (255, 255A) chacun avec un pas entre deux jambes, chaque groupe comprenant un conducteur de base avec un pas plus élevé (255A) et un ou plusieurs conducteurs de base avec un pas respectif progressivement plus faible (255), et dans lequel :

- des moyens supplémentaires mobiles de confinement (470) sont prévus pour contenir ledit un ou plusieurs conducteurs de base (255) avec le pas progressivement plus faible,

- lesdits moyens supplémentaires mobiles de confinement (470) étant configurés pour être actionnés afin de positionner ledit un ou plusieurs conducteurs de base avec le pas progressivement plus faible et retirés immédiatement avant l'insertion du conducteur de base avec le pas plus élevé (255A).

17. Dispositif selon la revendication 16, dans lequel l'extrémité opposée à l'extrémité d'insertion comprend un élément d'arrêt (466) pour la tête du conducteur de base avec pas plus faible.

18. Dispositif selon l'une quelconque des revendications 4 à 17, dans lequel le premier dispositif d'insertion et de manipulation (401) comprend un trou traversant (440U) configuré pour la seconde jambe d'un conducteur de base standard ou inversé et le second dispositif correspondant d'insertion et de manipulation (402) comprend un premier trou traversant (440S) pour la première jambe dans le cas d'un conducteur de base standard et un second trou traversant (440R) pour la première jambe dans le cas d'une épingle à cheveux inversée.

19. Dispositif selon les revendications 1 à 18, dans lequel lesdits moyens de chargement (530, 540) comprennent un système de transfert (530) configuré pour faire glisser l'extrémité de tête des conducteurs de base d'une station de chargement vers ledit volume de confinement (50OR).

20. Dispositif selon la revendication 19, dans lequel lesdits moyens de chargement comprennent un ou plusieurs rouleaux latéraux d'alimentation et de positionnement (540) disposés aux extrémités dudit volume de confinement transversalement à ladite direction axiale, rotatifs autour de ladite direction axiale et comprenant des ailettes (541) perpendiculaires à ladite direction axiale de manière à compacter par poussée, lors de la rotation desdits un ou plusieurs rouleaux latéraux d'alimentation et de positionnement, à chaque fois les conducteurs de base dans ledit volume de confinement contre lesdits premier (521) et second (522) corps de contre-moule.

21. Dispositif selon la revendication 20, dans lequel lesdits premier et second corps de contre-moule présentent des évidements latéraux configurés pour permettre auxdites ailettes (541) de poursuivre la rotation après la poussée des conducteurs de base.

22. Dispositif selon la revendication 20 ou 21, dans lequel lesdits un ou plusieurs rouleaux latéraux d'alimentation et de positionnement (540) sont les mêmes des deux côtés des corps de contre-moule et sont disposés de sorte que la droite passant par les centres respectifs de rotation n'est pas perpendiculaire, en utilisation, à une direction radiale par rapport à l'axe d'enroulement (50) mais présente une inclinaison $\alpha$ proportionnelle à une courbure de la portion de tête d'un conducteur de base.

23. Dispositif selon l'une quelconque des revendications 20 à 22, dans lequel les conducteurs de base présentent une section quadrangulaire en forme de bande (255z), avec deux côtés plus longs (255x) et deux côtés plus courts (255y), et dans lequel lesdits un ou plusieurs rouleaux latéraux d'alimentation et de positionnement (540) sont disposés de sorte que, dans une position desdits un ou plusieurs rouleaux latéraux d'alimentation et de positionnement correspondant à la position du conducteur de base dans ledit volume d'extrémité (500F), les ailettes (541) sont en contact le long d'un côté plus long entier (255x).

24. Dispositif selon l'une quelconque des revendications 20 à 23, dans lequel les conducteurs de base présentent une section quadrangulaire en forme de bande (255z), avec deux côtés plus longs (255x) et deux côtés plus courts (255y), et dans lequel lesdits un ou plusieurs rouleaux latéraux d'alimentation et de positionnement (540) sont disposés de sorte que, dans une position desdits un ou plusieurs rouleaux latéraux d'alimentation et de positionnement correspondant à la position du conducteur de base dans ledit volume d'extrémité (500F), les ailettes (541) sont en contact le long d'un côté plus court entier (255y).

25. Dispositif selon l'une quelconque des revendications 20 à 24, dans lequel lesdits un ou plusieurs rouleaux latéraux d'alimentation et de positionnement (540) sont disposés pour tourner, en utilisation, sur un angle inférieur à 180°, dans lequel la lame (510) est façonnée pour pousser seulement sur environ 2/3 de la surface de la portion de tête du conducteur de base, de sorte que le mouvement de la lame et des rouleaux est simultané.

26. Dispositif selon l'une quelconque des revendications 20 à 25, dans lequel ledit système de transfert (530) comprend un premier guide supérieur (530a,535) configuré pour supporter les extrémités de tête des conducteurs de base, ainsi que deux guides inférieurs (530b,530c) configurés pour glisser à l'intérieur des jambes du conducteur de base en cours d'alimentation.

27. Dispositif selon la revendication 26, dans lequel le guide supérieur se termine contiguëment à un support amovible (535) pour les extrémités de tête des conducteurs de base, qui est rétractable de manière à amener les conducteurs de base à glisser selon ladite direction axiale.

28. Dispositif selon la revendication 26 ou 27, dans lequel le guide supérieur (530a) est fixe, dans lequel les deux guides inférieurs (530b, 530c) sont configurés pour être éloignés l'un de l'autre ou rapprochés l'un de l'autre par des moyens de translation (534) des guides inférieurs, afin de charger et déplacer des conducteurs de base imbriqués.

FIG. 1
(PRIOR ART)

FIG. 2
(PRIOR ART)

FIG. 3
(PRIOR ART)

a)

b)

FIG. 4A
(PRIOR ART)

FIG. 4B
(PRIOR ART)

(a)    (b)    (c)

FIG. 4C
(PRIOR ART)

255-IP

FIG. 4D
(PRIOR ART)

N cave    N cave

FIG. 4E
(PRIOR ART)

FIG. 4F
(PRIOR ART)

FIG. 4G
(PRIOR ART)

FIG. 4H
(PRIOR ART)

255-IVP

FIG. 5
(PRIOR ART)

FIG. 6

400

480

410

420

430

100-Cl

255R

SLR

## FIG. 7

400

255R

300

350

255R

PFR

100-Cl

430

## FIG. 8

FIG. 9

FIG. 10

FIG.10a

FIG.10b

FIG. 11

FIG. 12

255A

255

(a)

FIG. 13

400'

466

T

(b)

70

510

520

500

530a

530

545

530b

540

530c

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

515

510

511

511

512

512

FIG. 28

255R

255

FIG. 29

FIG. 30

FIG. 31

510

521

522

# FIG. 32

520I1

520I2

520

CB1-2

CB3-4

CB5-6

ε

ε

2,86

2,86

# FIG. 33

FIG. 34

FIG. 35

FIG. 36

255

521,522

FIG. 37

255A

521,522

FIG. 38

FIG. 39

FIG. 40

FIG. 41

FIG. 42

FIG. 43

(a)

(b)

FIG. 44

FIG. 45

FIG. 46

FIG. 47

521

522

530

556

560

560

550

555    555

555    555

FIG. 48

FIG. 49

55

CB5-6    CB3-4    CB1-2

60

61    62

# FIG. 50

ε

# FIG. 51

CB5-6    CB5-6

CB1-2

CB3-4

# FIG. 54

510

530a

FIG. 52

535

530b

540

530c

521

SI

522

SE

530b

530c

530a

FIG. 53

FIG. 55

FIG. 56

FIG. 57

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7480987 B
- US 20090178270 A
- US 3837072 A
- US 8552611 B2
- US 6894417 B2
- US 7622843 B2
- US 10749399 B2
- US 20090302705 A

- WO 2019207448 A1
- US 2020336054 A
- EP 3700071 A1
- JP 2004072839 B
- WO 2018039806 A2
- US 2020343797 A
- JP 2012151996 A
- WO 2023052123 A